# EUROPEAN PATENT SPECIFICATION

(11) **EP 4 243 203 B1**
(45) Date of publication and mention of the grant of the patent: **22.04.2026**
(21) Application number: 21902483.3
(22) Date of filing: 02.12.2021
(51) Int. Cl.: H01Q 1/24, H01Q 5/385, H01Q 1/44, H01Q 9/04

(54) **ANTENNA APPARATUS AND ELECTRONIC DEVICE**
ANTENNENVORRICHTUNG UND ELEKTRONISCHE VORRICHTUNG
APPAREIL D'ANTENNE ET DISPOSITIF ÉLECTRONIQUE

(30) Priority: 08.12.2020 CN 202011423001
(43) Date of publication of application: 13.09.2023
(73) Proprietor: Huawei Technologies Co., Ltd., Shenzhen, Guangdong 518129 (CN)
(72) Inventor: WU, Pengfei, Shenzhen, Guangdong 518129 (CN); CHU, Jiahui, Shenzhen, Guangdong 518129 (CN); WANG, Hanyang, Shenzhen, Guangdong 518129 (CN); HOU, Meng, Shenzhen, Guangdong 518129 (CN); LEE, Chien-ming, Shenzhen, Guangdong 518129 (CN)
(74) Representative: Epping - Hermann - Fischer
(86) International application number: PCT/CN2021/135167
(87) International publication number: WO 2022/121776

(56) References cited:
- CN-A- 109 390 679
- CN-A- 109 962 331
- CN-A- 111 092 292
- TW-U- M 592 170
- US-A1- 2003 045 324
- US-A1- 2011 128 190
- US-A1- 2011 248 895
- US-A1- 2015 130 669
- US-A1- 2015 222 008
- US-A1- 2017 194 692
- US-A1- 2020 274 231

## Description

### TECHNICAL FIELD

Embodiments of this application relate to the field of terminal technologies, and in particular, to an electronic device.

### BACKGROUND

With continuous development of communication technologies, a multiple-input multiple-output (Multiple-Input Multiple-Output, MIMO) antenna technology is more widely used in an electronic device, and a requirement is increasingly high. Therefore, a quantity of antennas increases exponentially, and more frequency bands are covered. Currently, an electronic device product, especially an electronic device of a metal industry design (industry design, ID), still requires very high structural compactness and a metal proportion, while a recent electronic device design trend is a higher screen-to-body ratio, more multimedia devices, and a larger battery capacity. These designs cause antenna space to be sharply compressed. This brings a severe challenge to an antenna design of a metal body terminal. In the conventional technology, on an electronic device with a metal frame and a glass battery cover ID, a conventional design scheme of a MIMO antenna, for example, a MIMO antenna of a low band (Low Band, LB) frequency band (which may also be referred to as an LB MIMO antenna), generally means to design a plurality of low-frequency antennas on a metal frame. In addition, considering that a frequency band of the MIMO antenna is usually the same as a frequency band of an original communication antenna, isolation of an antenna system is prone to deterioration, and a distance between two adjacent low-frequency antennas is usually designed to be large, to achieve good isolation. However, in the foregoing scheme, the low-frequency antenna occupies an excessively large design area on the metal frame of the electronic device, which is unfavorable to layout of another antenna.

Document US 2011/0248895 A1 refers to a mobile wireless terminal that includes a housing, a cover removably attached to the housing, and an antenna device disposed inside the housing. The antenna device includes a first antenna element that is disposed inside the housing and serves as a feed element, a plate that provides a ground plane for the first antenna element, and a second antenna element that is formed on one surface of the cover so as to face the first antenna element with the cover being attached to the housing and capacitively couple to the first antenna element and that serves as a parasitic element.

Document US 2003/0045324 A1 discloses a wireless communication apparatus which includes a casing made of a dielectric material. An antenna including a feed element and first and second parasitic elements is provided in the casing. The feed element includes first and second feed radiation plates. A parasitic radiation plate of the first parasitic element is located near the first radiation plate, and a parasitic radiation plate of the second parasitic element is located near the second feed radiation plate. The amount of coupling between the feed element and the first and second parasitic elements is adjusted based on the relative permittivity of the casing. The feed element and the first parasitic element perform multi-resonance in the same frequency band as the resonance frequency of the first feed radiation plate. The feed element and the second parasitic element perform multi-resonance in the same frequency band as the resonance frequency of the second feed radiation plate.

Document US 2015/0130669 A1 refers to an antenna device including a feeding element connected to a feed point, and a radiating element disposed at a distance from the feeding element. The feeding element is coupled with the radiating element by electromagnetic field coupling to feed the radiating element so that the radiating element functions as a radiating conductor.

Document US 2017/0194692 A1 is drawn to an antenna device that includes a ground plane; a first resonator extending in a direction at a distance from the ground plane and connected to a feeding point; and a second resonator arranged at a distance from the first resonator. The ground plane includes an edge portion formed along the second resonator, with a resonance current being formed on the first resonator and the ground plane. The second resonator is configured to function as a radiation conductor by resonance of the first resonator. A tip portion of the first resonator is located near a metallic part. The second resonator has a plurality of electrical lengths of differing resonance frequencies. Document US 2015/0222008 A1 describes an auxiliary antenna system provided for a portable electronic device such as a smartphone or cellular phone or pad computer. The system positions one or a plurality of auxiliary antennas in or on walls of a protective case surrounding the electronic device. An internal antenna on the electronic device is communicated an RF signal of increased strengths and bandwidth from an auxiliary antenna coupled thereto. Additional auxiliary antennas may be positioned on the case to increase both signal and bandwidth.

### SUMMARY

Embodiments of this application provide an electronic device, to reduce a layout area on a metal frame, and reduce impact on another antenna. The present invention is defined by the attached set of claims. Embodiments and aspects which are not covered by the invention should be considered as examples useful for understanding the invention. Embodiments of this application provides an electronic device including an antenna apparatus, the electronic device also includes a middle frame, a battery cover, and a battery located between the middle frame and the battery cover, and the antenna apparatus includes: a group of coupling feeding elements and a group of radiation elements, where the group of radiation elements includes: a first radiator and a second radiator, where the first radiator and the second radiator are arranged on an inner surface of the battery cover; and the first radiator and the second radiator are respectively located on two sides of the group of coupling feeding elements, and the group of coupling feeding elements is separately coupled to and feeds the first radiator and the second radiator. The middle frame is a metal middle frame, the metal middle frame comprises a metal frame, and the metal frame is configured to form at least two metal frame antennas in the antenna apparatus

The antenna apparatus includes at least one group of coupling feeding elements and at least one group of radiation elements. A first radiator and a second radiator in the at least one group of radiation elements are arranged on an inner surface of a battery cover. The first radiator and the second radiator are respectively located on two sides of the coupling feeding element, and the coupling feeding element is separately coupled to and feeds the first radiator and the second radiator, so that distributed feeding connection between the coupling feeding element and the radiation element may be implemented. In this way, double resonance may be excited to implement wide frequency band coverage. Most of a feeding network may be implemented through a radiator arranged on the inner surface of the battery cover, so that a layout area of an antenna on a metal frame may be reduced, and impact on another antenna may be reduced. In addition, the antenna apparatus may be implemented in limited design space. This effectively saves antenna design space inside an electronic device to some extent.

In a possible implementation, at least one of the first radiator and the second radiator is located between orthographic projection of one side frame of the middle frame and the battery towards the battery cover.

In other words, at least one of the first radiator and the second radiator is located between the side frame (a left side frame or a right side frame) and an outer edge of the battery (an outer edge of the battery close to a side of the side frame). In this way, if at least one of the first radiator and the second radiator is not located in an orthographic projection area of the battery towards the battery cover, the battery does not block the first radiator or the second radiator. This avoids impact or interference on radiation performance of the first radiator or the second radiator.

In a possible implementation, the first radiator is located between the orthographic projection of one side frame of the middle frame and the battery towards the battery cover, and the second radiator is located between the orthographic projection of another opposite side frame of the middle frame and the battery towards the battery cover.

In this way, both the first radiator and the second radiator are located between the side frame (the left side frame or the right side frame) and the outer edge of the battery (the outer edge of the battery close to the side of the side frame). In other words, neither the first radiator nor the second radiator is located in the orthographic projection area of the battery towards the battery cover, and the battery does not block the first radiator and the second radiator. This avoids the impact or interference on the radiation performance of the first radiator and the second radiator.

In a possible implementation, the the at least two metal frame antennas are low-frequency antennas.

Using some metal frames of the electronic device as a radiator in the antenna apparatus helps further improve radiation performance of the antenna apparatus.

In a possible implementation, one end of the first radiator extends toward a top frame of the middle frame, and one end of the second radiator extends toward a bottom frame of the middle frame; an orthographic projection of one low-frequency antenna towards the battery cover is opposite to the first radiator, and the orthographic projection of the one low-frequency antenna towards the battery cover and the first radiator are respectively located on two sides of the orthographic projection of the battery towards the battery cover; and an orthographic projection of another low-frequency antenna towards the battery cover is opposite to the second radiator, and the orthographic projection of another low-frequency antenna towards the battery cover and the second radiator are respectively located on the two sides of the orthographic projection of the battery towards the battery cover.

The first radiator is arranged diagonally opposite to the second radiator, the first radiator is arranged opposite to one low-frequency antenna along a central axis in a length direction of the frame, and the second radiator is arranged opposite to another low-frequency antenna along the central axis in the length direction of the frame. One low-frequency antenna is arranged diagonally opposite to another low-frequency antenna. In this way, both the radiator (the first radiator or the second radiator) and the metal frame antennas (the two low-frequency antennas) are separately arranged, so that the radiator (the first radiator or the second radiator) is far away from the metal frame antennas in terms of spatial positions, and isolation between the first radiator and the metal frame antennas and between the second radiator and the metal frame antennas may be increased. In this way, an isolation effect between antenna modules in the antenna apparatus may be effectively improved, and further, it may be ensured that the first radiator and the second radiator do not cause interference to the metal frame antennas (the two low-frequency antennas).

In a possible implementation, one end of the first radiator extends toward a bottom frame of the middle frame, and one end of the second radiator extends toward the bottom frame of the middle frame; or one end of the first radiator extends toward a top frame of the middle frame, and one end of the second radiator extends toward the top frame of the middle frame; or one end of the first radiator extends toward a bottom frame of the middle frame, and one end of the second radiator extends toward a side frame of the middle frame.

In a possible implementation, an electrical length of the first radiator and an electrical length of the second radiator range from 1/4 λ to 1/2 λ, where λ is a wavelength corresponding to a resonant frequency of each of the first radiator and the second radiator.

In a possible implementation, each group of coupling feeding elements includes: a first coupling feeding element and a second coupling feeding element, where the first coupling feeding element is electrically connected to a feed, and the first coupling feeding element is separately coupled to and feeds another end of the first radiator and one end of the second coupling feeding element; and another end of the second coupling feeding element is coupled to and feeds another end of the second radiator.

In this way, the external feed feeds the first coupling feeding element, the first coupling feeding element is separately coupled to and feeds the first radiator and the second coupling feeding element, and then the second coupling feeding element is coupled to and feeds the second radiator. In this way, a process of feeding the first radiator and the second radiator through the feed is implemented.

In a possible implementation, the first coupling feeding element includes: a bracket and a feeding branch arranged on the bracket, where the feeding branch is electrically connected to the feed; and the bracket is fixed on the inner surface of the battery cover.

The bracket is fixed on the inner surface of the battery cover, so that the first coupling feeding element may be fixed. The feeding branch is electrically connected to the feed, so that the feed may feed the first coupling feeding element. The first coupling feeding element is separately coupled to and feeds the first radiator and the second coupling feeding element, and then the second coupling feeding element is coupled to and feeds the second radiator, to implement a process of feeding the first radiator and the second radiator through the feed.

In a possible implementation, the second coupling feeding element, the first radiator, and the second radiator are floating metals, graphene layers, or transparent conductive layers.

In a possible implementation, an operating frequency band of the first radiator and an operating frequency band of the second radiator range from 700 MHz to 900 MHz.

In a possible implementation, the apparatus further includes: at least one group of coupling grounding elements, where each group of coupling grounding elements includes at least two coupling ground layers, where one coupling ground layer is arranged close to one end of the first radiator and is coupled to and grounded with the first radiator; and another coupling ground layer is arranged close to one end of the second radiator and is coupled to and grounded with the second radiator.

In this way, the first radiator may be coupled to and grounded with the middle frame through the coupling ground layer close to the first radiator, and the second radiator may be coupled to and grounded with the middle frame through the coupling ground layer close to the second radiator.

Because the antenna apparatus may reduce a layout area of an antenna on a metal frame, impact on another antenna may be reduced, and the antenna apparatus may be implemented in limited design space. To some extent, antenna design space inside the electronic device is effectively saved, and the antenna apparatus is arranged in the electronic device. In this way, while a function of the electronic device is enhanced, an occupied size of the antenna apparatus in the electronic device may be reduced, so that effective space for mounting another component in the electronic device is provided, and an experience effect of the electronic device is optimized. In addition, stability of signal transmission in the electronic device is ensured, and normal operation of the electronic device is ensured.

At least two metal frame antennas in the antenna apparatus formed by some metal frames of the electronic device are used as radiators, which helps further improve radiation performance of the antenna apparatus in the electronic device. In a possible implementation, at least some coupling radiators are located between orthographic projection of one side frame of the middle frame and the battery towards the battery cover.

In other words, a part or all of the structure of the coupling radiator is located between the side frame (a left side frame or a right side frame) and an outer edge of the battery (an outer edge of the battery close to a side of the side frame). In this way, a part or all of the structure of the coupling radiator is not located in an orthographic projection area of the battery towards the battery cover. In this case, the battery does not block the coupling radiator or may block only a part of the structure of the coupling radiator. This avoids impact or interference on radiation performance that blocks the coupling radiator.

In a possible implementation, the feeding element is electrically connected to a feed, one end of the feeding element is coupled to and feeds the coupling radiator, and another end of the feeding element is electrically connected to the low-frequency antenna through a feeding cable, so that the feeding element feeds the low-frequency antenna.

In this way, an external feed feeds the feeding element, the feeding element is coupled to and feeds the coupling radiator, and the feeding element feeds the low-frequency antenna through a feeding cable. In this way, a process of feeding the coupling radiator and the low-frequency antenna through the feed is implemented.

In a possible implementation, the feeding element includes: a bracket and a feeding branch arranged on the bracket, where the feeding branch is electrically connected to the feed; and the bracket is fixed on the inner surface of the battery cover.

The bracket is fixed on the inner surface of the battery cover, so that the feeding element may be fixed. The feeding branch is electrically connected to the feed, so that the external feed may feed the feeding element. The feeding element is coupled to and feeds the coupling radiator, and the feeding element feeds the low-frequency antenna through the feeding cable, to implement a process of feeding the coupling radiator and the low-frequency antenna through the feed.

In a possible implementation, the coupling radiation element or the feeding element is a floating metal, a graphene layer, or a transparent conductive layer.

In a possible implementation, the electronic device further includes: at least one ground layer, where the ground layer is arranged close to one end of the coupling radiator and is coupled to and grounded with the coupling radiator; and the ground layer is further grounded to the low-frequency antenna through the feeding cable.

In this way, a first radiator may be coupled to and grounded with the middle frame through a coupling ground layer close to the first radiator. The coupling radiator may be coupled to and grounded with the middle frame through the ground layer close to the coupling radiator, and the low-frequency antenna may be grounded to the middle frame. With reference to the accompanying drawings, these and other aspects, implementation forms, and advantages of example embodiments will become apparent based on embodiments described below. However, it should be understood that the specification and the accompanying drawings are merely intended for descriptions and are not intended as definitions of limitations on embodiments of this application. For details, refer to the appended claims. Other aspects and advantages of embodiments of this application are described in the following description, and some aspects are obvious from the description or learned from practices of embodiments of this application. In addition, the aspects and advantages of embodiments of this application may be achieved and obtained by means and combinations specifically pointed out in the appended claims.

### BRIEF DESCRIPTION OF DRAWINGS

FIG. 1 is a schematic diagram of an overall structure of an electronic device according to an embodiment of this application;
FIG. 2 is a schematic diagram of a split structure of an electronic device according to an embodiment of this application;
FIG. 3A is a schematic diagram of a structure of an antenna apparatus in an electronic device according to an embodiment of this application;
FIG. 3B is a simulation model diagram of an antenna apparatus in an electronic device according to an embodiment of this application;
FIG. 3C is a simulation model diagram of an antenna apparatus in an electronic device according to an embodiment of this application;
FIG. 4 is a schematic diagram of a structure of an antenna apparatus in an electronic device according to an embodiment of this application;
FIG. 5 is a schematic diagram of a structure of an antenna apparatus in an electronic device according to an embodiment of this application;
FIG. 6 is a performance comparison diagram of an antenna apparatus in an electronic device according to an embodiment of this application;
FIG. 7 is a performance comparison diagram of an antenna apparatus in an electronic device according to an embodiment of this application;
FIG. 8A is a diagram of an actual application scenario in which an antenna apparatus in an electronic device is held close to a left ear by using a left hand according to an embodiment of this application;
FIG. 8B is a diagram of an actual application scenario in which an antenna apparatus in an electronic device is held close to a right ear by using a right hand according to an embodiment of this application;
FIG. 9 is a performance comparison diagram of an antenna apparatus in an electronic device according to an embodiment of this application;
FIG. 10 is a performance comparison diagram of an antenna apparatus in an electronic device according to an embodiment of this application;
FIG. 11A is a current distribution diagram of an antenna apparatus at 0.88 GHz in an electronic device according to an embodiment of this application;
FIG. 11B is an electric field distribution diagram of an antenna apparatus at 0.88 GHz in an electronic device according to an embodiment of this application;
FIG. 11C is a radiation pattern of an antenna apparatus at 0.88 GHz in an electronic device according to an embodiment of this application;
FIG. 12A is a current distribution diagram of an antenna apparatus at 0.92 GHz in an electronic device according to an embodiment of this application;
FIG. 12B is an electric field distribution diagram of an antenna apparatus at 0.92 GHz in an electronic device according to an embodiment of this application;
FIG. 12C is a radiation pattern of an antenna apparatus at 0.92 GHz in an electronic device according to an embodiment of this application;
FIG. 13 is a schematic diagram of a structure of an antenna apparatus in an electronic device according to an embodiment of this application;
FIG. 14 is a schematic diagram of a structure of an antenna apparatus in an electronic device according to an embodiment of this application;
FIG. 15 is a schematic diagram of a structure of an antenna apparatus in an electronic device according to an embodiment of this application;
FIG. 16 is a performance comparison diagram of an antenna apparatus in an electronic device according to an embodiment of this application;
FIG. 17 is a performance comparison diagram of an antenna apparatus in an electronic device according to an embodiment of this application;
FIG. 18A is a diagram of an actual application scenario in which an antenna apparatus in an electronic device is held close to a left ear by using a left hand according to an embodiment of this application;
FIG. 18B is a diagram of an actual application scenario in which an antenna apparatus in an electronic device is held close to a right ear by using a right hand according to an embodiment of this application;
FIG. 19 is a performance comparison diagram of an antenna apparatus in an electronic device according to an embodiment of this application;
FIG. 20 is a performance comparison diagram of an antenna apparatus in an electronic device according to an embodiment of this application;
FIG. 21A is a diagram of an actual application scenario in which an antenna apparatus in an electronic device is held by using a left hand according to an embodiment of this application;
FIG. 21B is a diagram of an actual application scenario in which an antenna apparatus in an electronic device is held by using a right hand according to an embodiment of this application;
FIG. 22 is a performance comparison diagram of an antenna apparatus in an electronic device according to an embodiment of this application;
FIG. 23 is a performance comparison diagram of an antenna apparatus in an electronic device according to an embodiment of this application;
FIG. 24A is a current distribution diagram of an antenna apparatus at 0.89 GHz in an electronic device according to an embodiment of this application;
FIG. 24B is an electric field distribution diagram of an antenna apparatus at 0.89 GHz in an electronic device according to an embodiment of this application;
FIG. 25A is a current distribution diagram of an antenna apparatus at 0.95 GHz in an electronic device according to an embodiment of this application;
FIG. 25B is an electric field distribution diagram of an antenna apparatus at 0.95 GHz in an electronic device according to an embodiment of this application;
FIG. 26 is a performance comparison diagram of an antenna apparatus in an electronic device according to an embodiment of this application;
FIG. 27 is a performance comparison diagram of an antenna apparatus in an electronic device according to an embodiment of this application;
FIG. 28 is a performance comparison diagram of an antenna apparatus in an electronic device according to an embodiment of this application;
FIG. 29A is a radiation pattern of a first low-frequency antenna of an antenna apparatus at 0.89 GHz in an electronic device according to an embodiment of this application;
FIG. 29B is a radiation pattern of a second low-frequency antenna of an antenna apparatus at 0.89 GHz in an electronic device according to an embodiment of this application;
FIG. 29C is a radiation pattern of a third low-frequency antenna of an antenna apparatus at 0.89 GHz in an electronic device according to an embodiment of this application;
FIG. 30A is a radiation pattern of a first low-frequency antenna of an antenna apparatus at 0.95 GHz in an electronic device according to an embodiment of this application;
FIG. 30B is a radiation pattern of a second low-frequency antenna of an antenna apparatus at 0.95 GHz in an electronic device according to an embodiment of this application;
FIG. 30C is a radiation pattern of a third low-frequency antenna of an antenna apparatus at 0.95 GHz in an electronic device according to an embodiment of this application;
FIG. 31A is a schematic diagram of a structure of an antenna apparatus in an electronic device according to an embodiment of this application;
FIG. 31B is a simulation model diagram of an antenna apparatus in an electronic device according to an embodiment of this application;
FIG. 32 is a schematic diagram of a structure of an antenna apparatus in an electronic device according to an embodiment of this application;
FIG. 33 is a schematic diagram of a structure of an antenna apparatus in an electronic device according to an embodiment of this application;
FIG. 34 is a performance comparison diagram of an antenna apparatus in an electronic device according to an embodiment of this application;
FIG. 35 is a performance comparison diagram of an antenna apparatus in an electronic device according to an embodiment of this application;
FIG. 36 is a performance comparison diagram of an antenna apparatus in an electronic device according to an embodiment of this application;
FIG. 37 is a performance comparison diagram of an antenna apparatus in an electronic device according to an embodiment of this application;
FIG. 38A is a current distribution diagram of an antenna apparatus at 1.3 GHz in an electronic device according to an embodiment of this application;
FIG. 38B is an electric field distribution diagram of an antenna apparatus at 1.3 GHz in an electronic device according to an embodiment of this application;
FIG. 38C is a radiation pattern of an antenna apparatus at 1.3 GHz in an electronic device according to an embodiment of this application;
FIG. 39A is a current distribution diagram of an antenna apparatus at 1.9 GHz in an electronic device according to an embodiment of this application;
FIG. 39B is an electric field distribution diagram of an antenna apparatus at 1.9 GHz in an electronic device according to an embodiment of this application;
FIG. 39C is a radiation pattern of an antenna apparatus at 1.9 GHz in an electronic device according to an embodiment of this application;
FIG. 40A is a current distribution diagram of an antenna apparatus at 2.01 GHz in an electronic device according to an embodiment of this application;
FIG. 40B is an electric field distribution diagram of an antenna apparatus at 2.01 GHz in an electronic device according to an embodiment of this application;
FIG. 40C is a radiation pattern of an antenna apparatus at 2.01 GHz in an electronic device according to an embodiment of this application;
FIG. 41 is a schematic diagram of a structure of an antenna apparatus in an electronic device according to an embodiment of this application;
FIG. 42 is a performance comparison diagram of an antenna apparatus in an electronic device according to an embodiment of this application;
FIG. 43 is a schematic diagram of a structure of an antenna apparatus in an electronic device according to an embodiment of this application;
FIG. 44 is a schematic diagram of a structure of an antenna apparatus in an electronic device according to an embodiment of this application;
FIG. 45 is a schematic diagram of a structure of an antenna apparatus in an electronic device according to an embodiment of this application;
FIG. 46 is a schematic diagram of a structure of an antenna apparatus in an electronic device according to an embodiment of this application;
FIG. 47 is a schematic diagram of a structure of an antenna apparatus in an electronic device according to an embodiment of this application;
FIG. 48 is a schematic diagram of a structure of an antenna apparatus in an electronic device according to an embodiment of this application;
FIG. 49 is a schematic diagram of a structure of an antenna apparatus in an electronic device according to an embodiment of this application; and
FIG. 50 is a schematic diagram of a structure of an antenna apparatus in an electronic device according to an embodiment of this application.

### Descriptions of reference numerals:

100-antenna apparatus; 10-coupling feeding element; 101-first coupling feeding element; 102-second coupling feeding element; 20-radiation element; 201-first radiator; 202-second radiator; 30-metal frame antenna; 40-coupling grounding element; 401-coupling ground layer; 50-coupling radiation element; 60-feeding element; 70-printed circuit board; 200-mobile phone; 21-display screen; 211-opening; 22-middle frame; 221-metal middle plate; 222-frame; 2221-top frame; 2222-bottom frame; 2223-left side frame; 2224-right side frame; 23-circuit board; 24-battery; 25-battery cover; 26a-front camera module; and 26b-rear camera module.

### DESCRIPTION OF EMBODIMENTS

The terms used in embodiments of this application are only used to explain specific embodiments of this application, and are not intended to limit this application. The following will describe the implementations of embodiments of this application in detail with reference to the accompanying drawings.

Embodiments of this application provide an electronic device, which may include but is not limited to a fixed or mobile terminal with an antenna such as a mobile phone, a tablet computer, a notebook computer, an ultra-mobile personal computer (ultra-mobile personal computer, UMPC), a handheld computer, a walkie-talkie, a netbook, and a point of sales (Point of sales, POS) machine, a personal digital assistant (personal digital assistant, PDA), a wearable device, a virtual reality device, a wireless USB flash drive, a Bluetooth audio/headset, or a vehicle-mounted front-mounted device, a car recorder, and a security device.

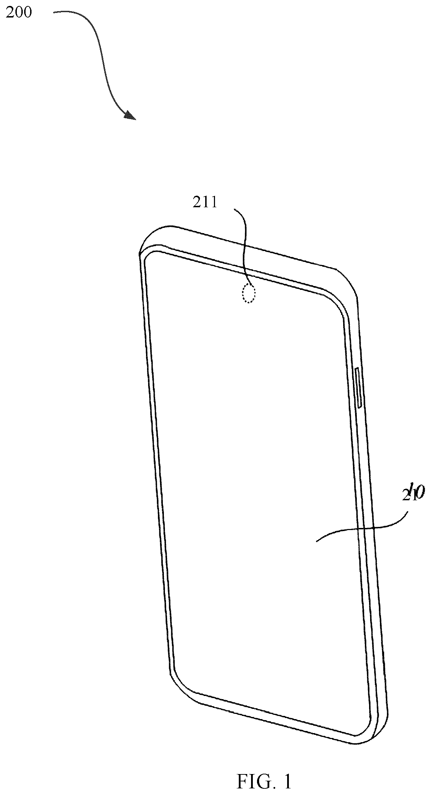

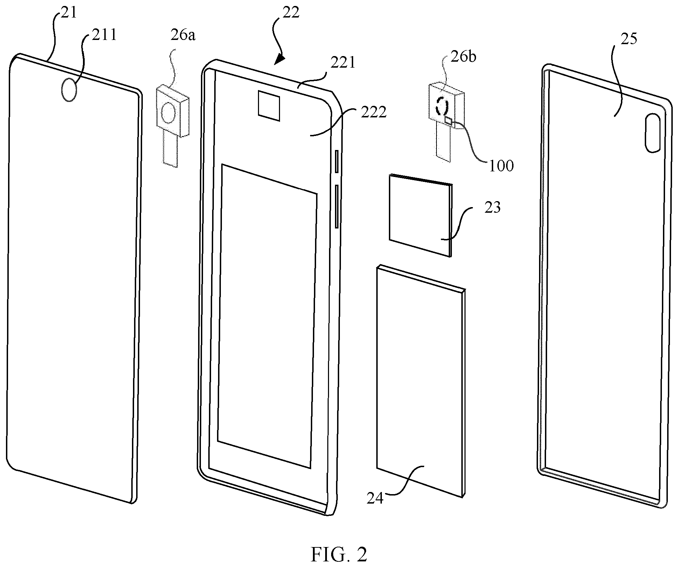

In embodiments of this application, a description is made by using an example in which a mobile phone 200 is the foregoing electronic device. The mobile phone 200 provided in embodiments of this application may be a curved-screen mobile phone or may be a flat-screen mobile phone. In embodiments of this application, a description is made by using an example of the flat-screen mobile phone. FIG. 1 and FIG. 2 respectively show an overall structure and a split structure of the mobile phone 200. A display screen 21 of the mobile phone 200 provided in embodiments of this application may be a water drop screen, a bang screen, a bezel-less screen, or a hole-cut screen (referring to FIG. 1). A description is made below by using an example of the hole-cut screen.

Referring to FIG. 2, the mobile phone 200 may include: a display screen 21, a middle frame 22, a battery cover 25, and a battery 24 located between the middle frame 22 and the battery cover 25. The battery 24 may be arranged on a surface that is of the middle frame 22 and that faces the battery cover 25 (as shown in FIG. 2). Alternatively, the battery 24 may be arranged on a surface that is of the middle frame 22 and that faces the display screen 21. For example, the surface that is of the middle frame 22 and that faces the battery cover 25 may have a battery compartment (not shown in the figure), and the battery 24 is mounted in the battery compartment. In some other examples, the mobile phone 200 may further include a circuit board 23, where the circuit board 23 may be arranged on the middle frame 22. For example, the circuit board 23 may be arranged on the surface that is of the middle frame 22 and that faces the battery cover 25 (as shown in FIG. 2). Alternatively, the circuit board 23 may be arranged on the surface that is of the middle frame 22 and that faces the display screen 21, and the display screen 21 and the battery cover 25 are respectively located on two sides of the middle frame 22.

The battery 24 may be connected to a charging management module and the circuit board 23 through a power management module. The power management module receives input from the battery 24 and/or the charging management module, and supplies power to a processor, an internal memory, an external memory, the display screen 21, a camera module, a communication module, and the like. The power management module may be further configured to monitor parameters such as a battery 24 capacity, a battery 24 cycle count, and a battery 24 state of health (leakage and impedance). In some other embodiments, the power management module may also be arranged in a processor of the circuit board 23. In some other embodiments, the power management module and the charging management module may further be configured in a same device.

When the mobile phone 200 is the flat-screen mobile phone, the display screen 21 may be an organic light-emitting diode (Organic Light-Emitting Diode, OLED) display screen, or may be a liquid crystal display (Liquid Crystal Display, LCD). When the mobile phone 200 is the curved-screen mobile phone, the display screen 21 may be the OLED display screen.

Still referring to FIG. 2, the middle frame 22 may include a metal middle plate 221 and a frame 222, and the frame 222 is arranged surrounding an outer periphery of the metal middle plate 221. Generally, the frame 222 may include a top frame 2221, a bottom frame 2222, a left side frame 2223, and a right side frame 2224. The top frame 2221, the bottom frame 2222, the left side frame 2223, and the right side frame 2224 surround and form a frame 222 of a square ring structure. A material of the metal middle plate 221 includes but is not limited to an aluminum plate, an aluminum alloy, a stainless steel, a steel-aluminum composite die-casting plate, a titanium alloy, a magnesium alloy, or the like. The frame 222 may be a metal frame, a ceramic frame, or a glass frame. When the frame 222 is the metal frame, a material of the metal frame includes but is not limited to the aluminum alloy, the stainless steel, the steel-aluminum composite die-casting plate, the titanium alloy, or the like. The metal middle plate 221 and the frame 222 may be clamped, welded, bonded, or integrally formed, or the metal middle plate 221 may be fixedly connected to the frame 222 by injection molding.

Referring to FIG. 2, the top frame 2221 is arranged opposite to the bottom frame 2222, the left side frame 2223 is arranged opposite to the right side frame 2224. The top frame 2221 is separately connected to one end of the left side frame 2223 and one end of the right side frame 2224 in a rounded manner. The bottom frame 2222 is separately connected to another end of the left side frame 2223 and another end of the right side frame 2224 in a rounded manner, to jointly form a rounded rectangular area. A rear housing grounding surface is arranged in the rounded rectangular area, and is separately connected to the top frame 2221, the bottom frame 2222, the left side frame 2223, and the right side frame 2224. It may be understood that the rear housing grounding surface may be the battery cover 25 of the mobile phone 200.

The battery cover 25 may be a metal battery cover, a glass battery cover, a plastic battery cover, or a ceramic battery cover. In embodiments of this application, a material of the battery cover 25 is not limited, and is not limited to the foregoing example.

It should be noted that in some examples, the battery cover 25 of the mobile phone 200 may be connected to the frame 222 to form an integrally formed (Unibody) battery cover. For example, the mobile phone 200 may include: the display screen 21, the metal middle plate 221, and the battery cover. The battery cover may be a battery cover integrally formed (Unibody) by the frame 222 and the battery cover 25. In this way, the circuit board 23 and the battery 24 are located in space enclosed by the metal middle plate 221 and the battery cover.

To implement a photographing function, the mobile phone 200 may further include: a camera module. Still referring to FIG. 2, the camera module may include a front camera module 26a and a rear camera module 26b. The rear camera module 26b may be arranged on a surface that is of the metal middle plate 221 and that faces the battery cover 25. An opening 211 is provided on the display screen 21, and a lens of the rear camera module 26b corresponds to the opening 211. A mounting hole (not shown in the figure) that may be mounted in a partial area of the rear camera module 26b may be provided on the battery cover 25. Certainly, the rear camera module 26b may also be mounted on a surface that is of the battery cover 25 and that faces the metal middle plate 221. The front camera module 26a may be arranged on a surface that is of the metal middle plate 221 and that faces the display screen 21, or the front camera module 26a may be arranged on a surface that is of the metal middle plate 221 and that faces the battery cover 25, or the front camera module 26a may be further arranged on the surface that is of the battery cover 25 and that faces the display screen 21, and an opening that may be exposed at a lens end of the front camera module 26a is provided on the metal middle plate 221.

In embodiments of this application, arrangement positions of the front camera module 26a and the rear camera module 26b include but are not limited to the foregoing description. In some embodiments, there may be 1 or N front camera modules 26a and rear camera modules 26b arranged in the mobile phone 200, where N is a positive integer greater than 1.

It may be understood that an example structure in embodiments of this application does not constitute a specific limitation on the mobile phone 200. In some other embodiments of this application, the mobile phone 200 may include more or fewer components than those shown in the figure, or some components may be combined, or some components may be split, or components are arranged in different manners. The components shown in the figure may be implemented by hardware, software, or a combination of software and hardware.

To further increase an implementable function of the mobile phone 200, an antenna may be arranged on the mobile phone 200. Currently, most electronic devices use an ID design of the metal frame and the glass rear cover. Because a size of the metal frame is limited and an antenna environment is tight, antennas of some frequency bands may only stimulate a single mode of the metal frame to minimize the size. Therefore, a bandwidth of the antenna designed by using the metal frame is narrow especially when the antenna is designed in a low-frequency band, and performance is greatly affected by hand holding. Currently, specifications of a low-frequency three-antenna and a low-frequency four-antenna are gradually put on the agenda. An added MIMO antenna continues to use a frame antenna design, and occupies a large layout area on a metal frame of a mobile phone. Therefore, space of other antennas is inevitably compressed, which greatly affects other antennas (such as medium and high frequency antennas). Therefore, it is urgent to find a novel MIMO antenna scheme that has little impact on other antennas.

Based on this, embodiments of this application provide an antenna apparatus. The antenna apparatus may be used in the foregoing electronic device (for example, the mobile phone 200), and a first radiator, a second radiator, and a coupling feeding element in the antenna apparatus are all arranged on an inner surface of a battery cover. Specifically, the antenna apparatus includes at least one group of coupling feeding elements and at least one group of radiation elements. A first radiator and a second radiator in the at least one group of radiation elements are arranged on an inner surface of a battery cover. The first radiator and the second radiator are respectively located on two sides of the coupling feeding element, and the coupling feeding element is separately coupled to and feeds the first radiator and the second radiator, so that distributed feeding connection between the coupling feeding element and the radiation element may be implemented. In this way, double resonance may be excited to implement wide frequency band coverage. Most of a feeding network may be implemented through a radiator arranged on the inner surface of the battery cover, so that a layout area of an antenna on a metal frame may be reduced, and impact on another antenna may be reduced. In addition, the antenna apparatus may be implemented in limited design space. This effectively saves antenna design space inside an electronic device to some extent.

It should be noted that the antenna apparatus provided in this application is configured for an electronic device that uses one or more of the following MIMO communication technologies: for example, a long term evolution (long term evolution, LTE) communication technology, a Wi-Fi communication technology, a 5G communication technology, a SUB-6G communication technology, and another future MIMO communication technology.

The following uses different embodiments as an example, and describes a specific structure of the antenna apparatus with reference to the accompanying drawings. (The following embodiments do not highlight a requirement of a communication network, and only describe an operating feature of the antenna apparatus by using a frequency value.)

### Embodiment 1

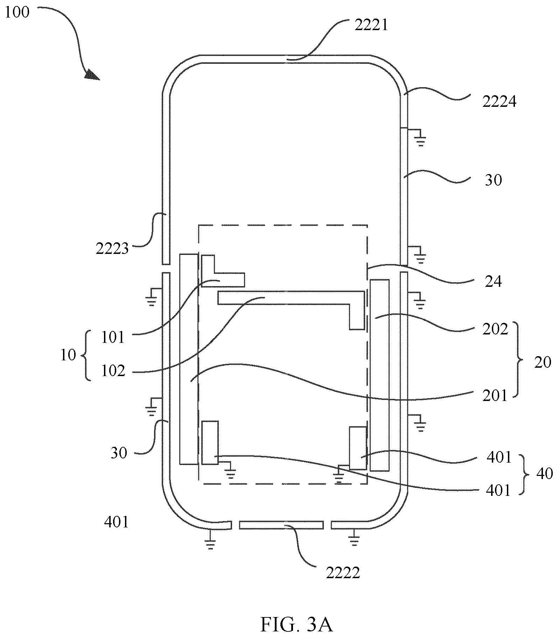

Embodiments of this application provide an antenna apparatus 100. The antenna apparatus 100 is configured for an electronic device. The electronic device (for example, a mobile phone 200) may include at least a middle frame 22, a battery cover 25, and a battery 24 (referring to FIG. 2) located between the middle frame 22 and the battery cover 25. As shown in FIG. 3A, the antenna apparatus 100 may include: at least one group of coupling feeding elements 10 and at least one group of radiation elements 20. Specifically, in embodiments of this application, each group of radiation elements 20 may include: a first radiator 201 and a second radiator 202. The first radiator 201 and the second radiator 202 may be arranged on an inner surface of the battery cover 25, and the first radiator 201 and the second radiator 202 may be respectively located on two sides of the coupling feeding element 10. In addition, the coupling feeding element 10 is separately coupled to and feeds the first radiator 201 and the second radiator 202.

To some extent, the antenna apparatus 100 may be implemented in limited design space. This effectively saves antenna design space inside the electronic device. In addition, a groove does not need to be additionally provided on the antenna apparatus 100 on a metal frame of the middle frame 22, so that an industrial design appearance of the electronic device is not affected, and hand holding impact may be effectively reduced.

The first radiator 201 and the second radiator 202 may be printed or pasted on the inner surface of the battery cover 25, or the first radiator 201 and the second radiator 202 may be embedded in the inner surface of the battery cover 25. A specific manner of arranging the first radiator 201 and the second radiator 202 on the inner surface of the battery cover 25 is not limited in embodiments of this application, and is not limited to the foregoing example. Certainly, in some other embodiments, the first radiator 201 and the second radiator 202 may alternatively be arranged on an outer surface of the battery cover 25. This is not limited in embodiments of this application.

It may be understood that in some embodiments, the antenna apparatus 100 provided in embodiments of this application may include a plurality of groups of radiation elements 20, to add more radiators. As a quantity of radiators increases, the antenna apparatus 100 may implement coverage of more modes.

In embodiments of this application, at least one of the first radiator 201 and the second radiator 202 may be located between an orthographic projection of one side frame of the middle frame 22 and the battery 24 towards the battery cover 25. In other words, at least one of the first radiator 201 and the second radiator 202 may be located between an outer edge of the side frame (a left side frame 2223 or a right side frame 2224) and an outer edge of the battery 24 (an outer edge of the battery 24 close to a side of the side frame). For example, referring to FIG. 3A, the first radiator 201 is located between the left side frame 2223 and the outer edge of the battery 24 close to the side of the left side frame 2223. In this way, at least one of the first radiator 201 and the second radiator 202 is located outside an orthographic projection area of the battery 24 towards the battery cover 25, and the battery 24 does not block the first radiator 201 or the second radiator 202. Further, influence or interference on radiation performance of the first radiator 201 or the second radiator 202 may be avoided.

Further, in some embodiments, the first radiator 201 may be located between the orthographic projection of one side frame of the middle frame 22 and the battery 24 towards the battery cover 25. The second radiator 202 may be located between the orthographic projection of another opposite side frame of the middle frame 22 and the battery 24 towards the battery cover 25. In other words, the first radiator 201 may be located between one of the side frames of the middle frame 22 and the outer edge of the battery 24 (the outer edge of the battery 24 close to the side of the side frame). The second radiator 202 may be located between another side frame opposite to the side frame of the middle frame 22 and another opposite outer edge of the battery 24 (another outer edge of the battery 24 close to the side of another side frame). For example, as shown in FIG. 3A, the first radiator 201 is located between the left side frame 2223 and the outer edge of the battery 24 close to a side of the left side frame 2223, and the second radiator 202 is located between the right side frame 2224 and the outer edge of the battery 24 close to a side of the right side frame 2224.

In this way, both the first radiator 201 and the second radiator 202 are located between the side frame (the left side frame 2223 or the right side frame 2224) and the outer edge of the battery 24 (the outer edge of the battery 24 close to the side of the side frame). In other words, neither the first radiator 201 nor the second radiator 202 are located in the orthographic projection area of the battery 24 towards the battery cover 25, and the battery 24 does not block the first radiator 201 and the second radiator 202. This avoids the impact or interference on the radiation performance of the first radiator 201 and the second radiator 202.

Alternatively, in some other embodiments, the first radiator 201 or the second radiator 202 may not be completely located between the side frame (the left side frame 2223 or the right side frame 2224) and the outer edge of the battery 24 (the outer edge of the battery 24 close to the side of the side frame). In other words, a part of the first radiator 201 or the second radiator 202 may also be located in the orthographic projection area of the battery 24 towards the battery cover 25, provided that it is ensured that not all of the first radiator 201 or the second radiator 202 are located in the orthographic projection area of the battery 24 towards the battery cover 25. In other words, in some examples, some areas of the first radiator 201 and the second radiator 202 may be located in the orthographic projection area of the battery 24 towards the battery cover 25. However, most areas of the first radiator 201 and the second radiator 202 are located outside the orthographic projection area of the battery 24 towards the battery cover 25.

The antenna apparatus 100 further includes: at least two metal frame antennas 30, and two of the at least two metal frame antennas 30 may be low-frequency antennas. For example, as shown in FIG. 3A, the antenna apparatus 100 further includes two metal frame antennas 30, and both the two metal frame antennas 30 are low-frequency antennas. Using some metal frames of the electronic device as a radiator in the antenna apparatus 100 helps further improve radiation performance of the antenna apparatus 100.

It should be noted that in embodiments of this application, the middle frame 22 is a metal middle frame, the metal middle frame includes at least a metal frame, and the metal frame forms at least two metal frame antennas 30 in the antenna apparatus 100. Specifically, the metal frame antenna 30 may be a radiator located on the metal frame, and a slot is provided on the metal frame to form the radiator. In other words, the metal frame antenna 30 is a groove antenna formed by providing a slot on the metal frame. The groove antenna may include a first part, a second part, and a third part that are separated by a slot, where a non-conductive material may be filled between the first part and the second part, between the second part and the third part, and between the third part and the first part.

In actual application, a position of the slot may be changed as required, and each slot may be filled with the non-conductive material (for example, plastic), to ensure appearance integrity of the metal frame. A providing position of the slot on the metal frame is flexibly set, so that appearance designs with different requirements may be implemented while antenna radiation performance is ensured, and product quality of the electronic device may be improved.

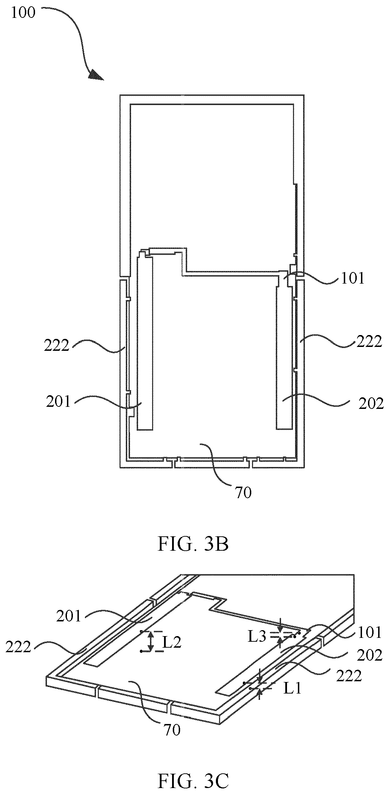

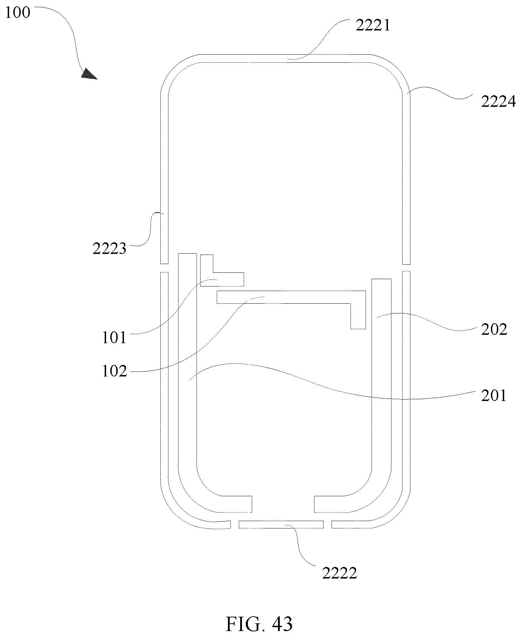

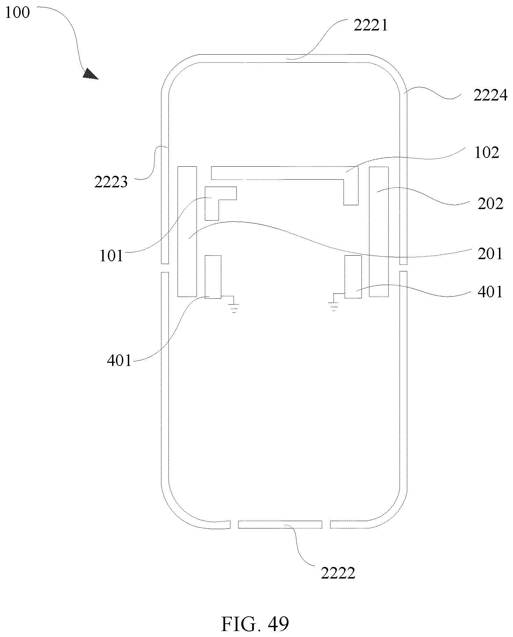

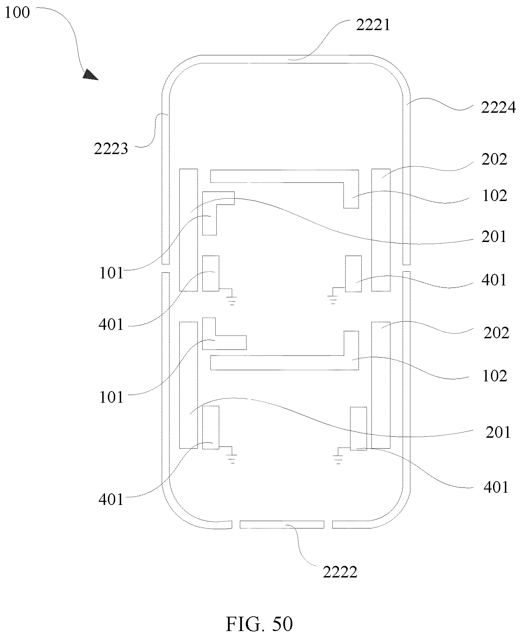

In embodiments of this application, an extension direction of the first radiator 201 and an extension direction of the second radiator 202 may include but are not limited to the following several possible implementations:
In a possible implementation, one end of the first radiator 201 may extend toward a bottom frame of the middle frame 22, and one end of the second radiator 202 may extend toward the bottom frame of the middle frame 22 (refer to FIG. 3, FIG. 43, FIG. 49, or FIG. 50).

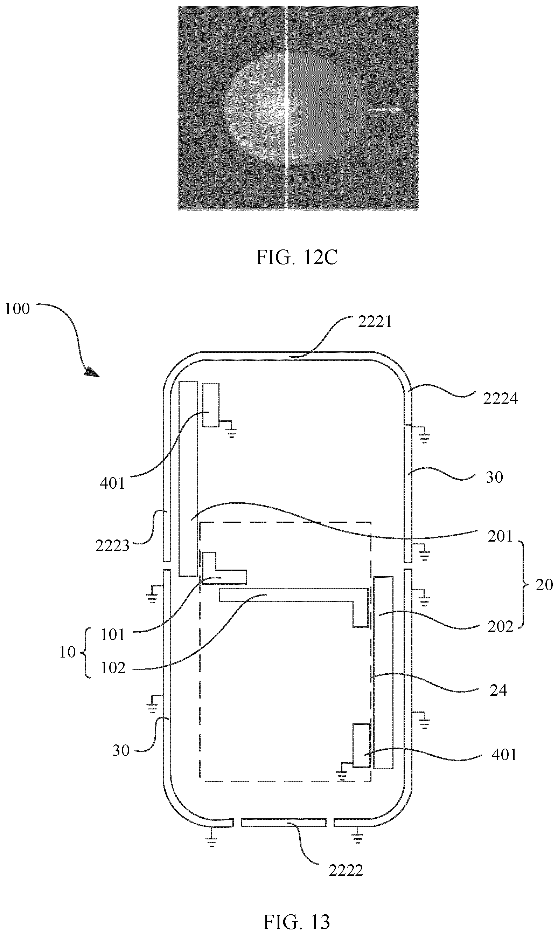

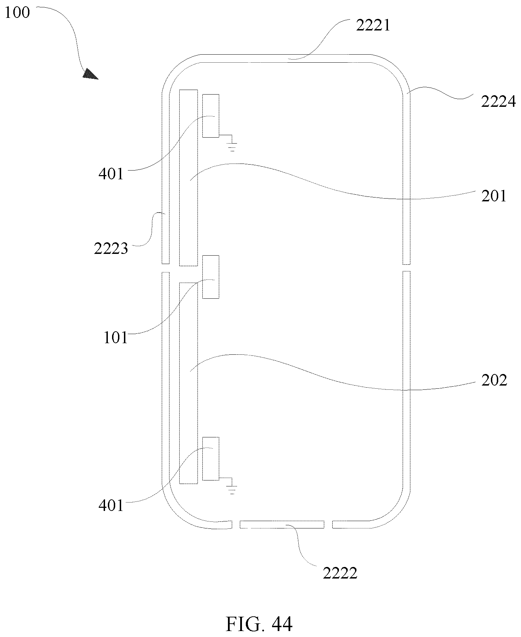

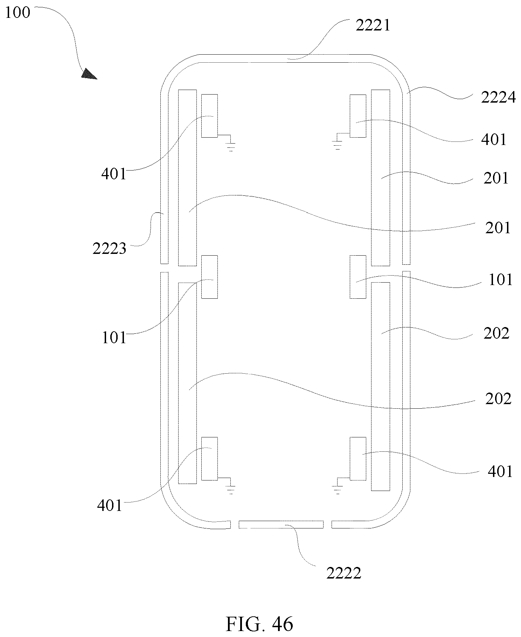

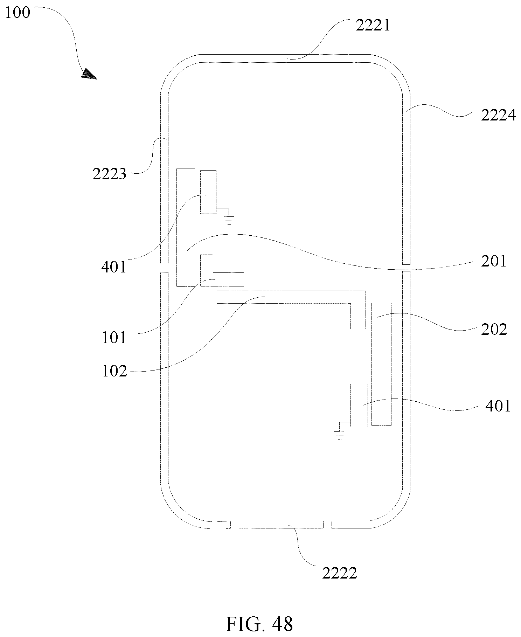

In another possible implementation, one end of the first radiator 201 may extend toward a top frame of the middle frame 22, and one end of the second radiator 202 may extend toward the bottom frame of the middle frame 22 (refer to FIG. 13, FIG. 44, FIG. 46, or FIG. 48).

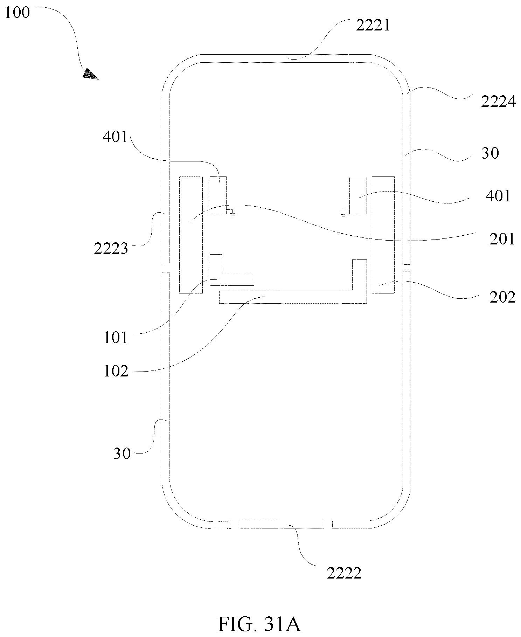

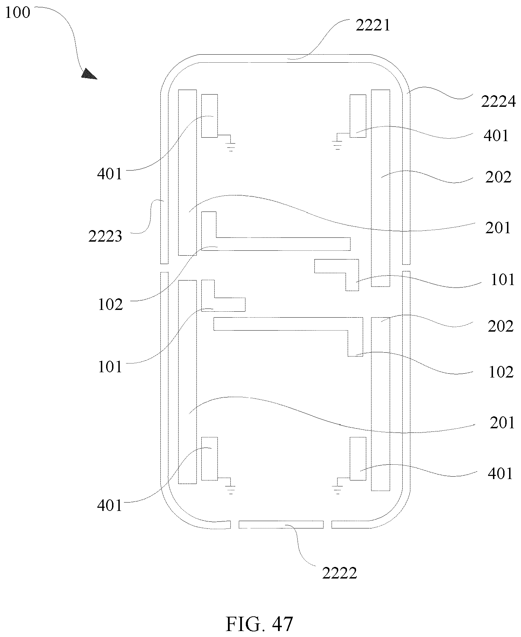

In still another possible implementation, one end of the first radiator 201 may extend toward the top frame of the middle frame 22, and one end of the second radiator 202 may extend toward the top frame of the middle frame 22 (refer to FIG. 31A or FIG. 47).

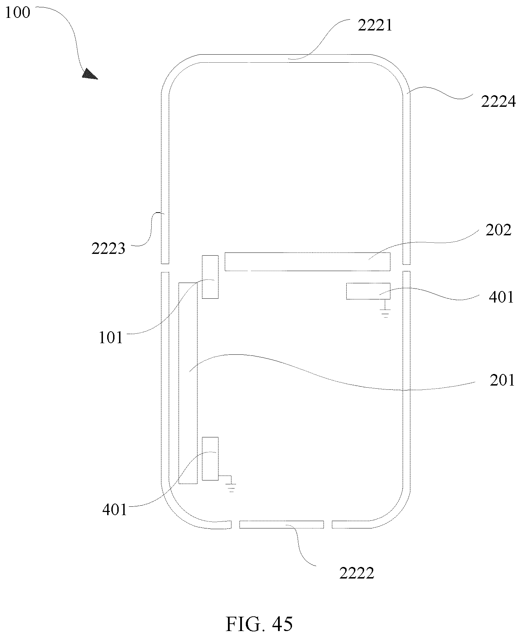

In yet another possible implementation, one end of the first radiator 201 may extend toward the bottom frame of the middle frame 22, and one end of the second radiator 202 may extend toward a side frame of the middle frame 22 (refer to FIG. 45).

Based on the foregoing description, in embodiments of this application, an electrical length of the first radiator 201 and an electrical length of the second radiator 202 may range from 1/4 λ to 1/2 λ, where λ is a wavelength corresponding to a resonant frequency of the first radiator 201 and a wavelength corresponding to a resonant frequency of the second radiator 202. The electrical length of the first radiator 201 and the electrical length of the second radiator 202 are one quarter wavelength to one half wavelength corresponding to a required resonant frequency.

Further, with reference to FIG. 3A, each group of coupling feeding elements 10 may include: a first coupling feeding element 101 and a second coupling feeding element 102, where the first coupling feeding element 101 may be electrically connected to a feed. In addition, the first coupling feeding element 101 may be separately coupled to and feed another end of the first radiator 201 and one end of the second coupling feeding element 102, and another end of the second coupling feeding element 102 may be coupled to and feed another end of the second radiator 202. In this way, the external feed feeds the first coupling feeding element 101, the first coupling feeding element 101 is separately coupled to and feeds the first radiator 201 and the second coupling feeding element 102, and then the second coupling feeding element 102 is coupled to and feeds the second radiator 202. In this way, a process of feeding the first radiator 201 and the second radiator 202 through the feed is implemented.

In embodiments of this application, the first coupling feeding element 101 may include: a bracket (not shown in the figure) and a feeding branch (not shown in the figure) arranged on the bracket, where the feeding branch is electrically connected to the feed (or, the feeding branch may have a feeding point, and the feeding point is electrically connected to the feed), and the bracket may be fixed on the inner surface of the battery cover 25. The bracket is fixed on the inner surface of the battery cover 25, so that the first coupling feeding element 101 may be fixed. The feeding branch is electrically connected to the feed, so that the feed may feed the first coupling feeding element 101. The first coupling feeding element 101 is separately coupled to and feeds the first radiator 201 and the second coupling feeding element 102, and then the second coupling feeding element 102 is coupled to and feeds the second radiator 202, to implement a process of feeding the first radiator 201 and the second radiator 202 through the feed.

In addition, the feeding branch may also be directly a circuit layer arranged on the bracket, and the feeding branch may be directly formed and etched on the bracket by laser, to form a part that is fixed to the inner surface of the battery cover 25, and a part that is fixed to the first coupling feeding element 101 that is electrically connected to the external feed. It should be noted that if the feeding branch is implemented through a floating metal, the feeding branch may also be configured to cover another frequency band.

In an optional implementation, the bracket may be an insulating material. For example, the bracket may be any one or more of polycarbonate, acrylonitrile-butadiene-styrene copolymer, and a mixture PC/ABS material (for example, plastic). This is not limited in embodiments of this application, and is not limited to the foregoing example.

In a possible implementation, the coupling feeding element 10 (for example, the first coupling feeding element 101 and the second coupling feeding element 102) may also be arranged on the battery cover 25. In addition, there is a coupling spacing between the first coupling feeding element 101 and the second coupling feeding element 102, the second coupling feeding element 102 is coupled by the first coupling feeding element 101 in the air, and a coupling region may be formed between the second coupling feeding element 102 and the first coupling feeding element 101. It should be understood that the smaller the coupling spacing, the stronger the coupling effect. The larger the coupling distance, the weaker the coupling effect. The larger the coupling region, the stronger the coupling effect. The smaller the coupling region, the weaker the coupling effect. The coupling spacing and a specific value of the coupling region may be flexibly set based on an actual application requirement. This is not limited in embodiments of this application. Still referring to FIG. 3A, the antenna apparatus 100 may further include: at least one group of coupling grounding elements 40, where each group of coupling grounding elements 40 may include at least two coupling ground layers 401. One coupling ground layer 401 is arranged close to one end of the first radiator 201 and is coupled to and grounded with the first radiator 201, and another coupling ground layer 401 is arranged close to one end of the second radiator 202 and is coupled to and grounded with the second radiator 202. The first radiator 201 may be coupled to and grounded with the middle frame 22 through the coupling ground layer 401 close to the first radiator 201, and the second radiator 202 may be coupled to and grounded with the middle frame 22 through the coupling ground layer 401 close to the second radiator 202.

It is easily understood that in embodiments of this application, one end of the coupling ground layer 401 may be connected to at least one of the first radiator 201 and the second radiator 202, and another end of the coupling ground layer 401 may be connected to a ground layer of the electronic device. Certainly, in some other embodiments, the first radiator 201 and the second radiator 202 may alternatively not use a coupling grounding structure, for example, may be directly grounded through the feeding cable. The feeding cable may be a wired cable (for example, a cable), a transmission cable, or the like. A grounding structure of the antenna apparatus 100 is not limited in embodiments of this application, and is not limited to the foregoing example.

In embodiments of this application, the first radiator 201 and the second radiator 202 are low-frequency antennas. When the first radiator 201 and the second radiator 202 are used as the low-frequency antennas, an operating frequency band of the first radiator 201 and an operating frequency band of the second radiator 202 may be 700 MHz to 900 MHz. For example, the operating frequency band of the first radiator 201 and the operating frequency band of the second radiator 202 may be 700 MHz, 800 MHz, 900 MHz, or the like. This is not limited in embodiments of this application, and is not limited to the foregoing example.

Specifically, the first radiator 201 and the second radiator 202 may be arranged on the inner surface of the battery cover 25. Design space of the first radiator 201 and design space of the second radiator 202 on the inner surface of the battery cover 25 are sufficient, and a size of the first radiator 201 and a size of the second radiator 202 may be designed to be large. In this way, a coupling antenna design structure formed by the first radiator 201, the second radiator 202, and the coupling feeding element 10 may excite a resonant mode of a low-frequency band, generate more resonances, and implement coverage of more frequency bands. Alternatively, in some other embodiments, the size of the first radiator 201 and the size of the second radiator 202 included in the antenna apparatus 100 may be designed to be small, influence of surrounding components is reduced, and may be implemented in small design space.

In addition, in some embodiments, an example in which the first radiator 201 and the second radiator 202 are floating metal antennas is used. A filter, such as a band-pass filter or a high-frequency filter, may be further arranged inside the first radiator 201 and the second radiator 202. In this way, a signal radiated by a floating metal antenna may be filtered. In other words, a plurality of frequency bands may be implemented.

In embodiments of this application, the second coupling feeding element 102, the first radiator 201, and the second radiator 202 may be floating metals, graphene layers, or transparent conductive layers. The first radiator 201 may be configured to form a first MIMO antenna, and the second radiator 202 may be configured to form a second MIMO antenna. Certainly, in embodiments of this application, the second coupling feeding element 102, the first radiator 201, and the second radiator 202 include but are not limited to floating metal antennas, graphene antennas, and transparent antennas. For example, the first radiator 201 and the second radiator 202 that are arranged on the inner surface of the battery cover 25 may alternatively be other antenna elements that are arranged on the inner surface of the battery cover 25 and that may be coupled and radiate signals.

FIG. 3B and FIG. 3C are simulation model diagrams of an antenna apparatus 100 according to an embodiment of this application. An example in which a second coupling feeding element 102, a first radiator 201, and a second radiator 202 are floating metals is used. Referring to FIG. 3C, a distance L1 between the first radiator 201 (namely, a first floating metal antenna) and a frame 222 (a metal frame) and a distance L 1 between the second radiator 202 (namely, a second floating metal antenna) and the frame 222 (a metal frame) may range from 0.3 mm to 0.7 mm. An example in which a size of the electronic device having the antenna apparatus 100 is 158 mm*78 mm (referring to FIG. 3B) is used. A distance between the first floating metal antenna and the metal frame and a distance L1 between the second floating metal antenna and the metal frame may be 0.4 mm, 0.5 mm, 0.6 mm, or the like. This is not limited in embodiments of this application, and is not limited to the foregoing example. A distance L2 between the first radiator 201 (namely, the first floating metal antenna) and a printed circuit board 70 and a distance L2 between the second radiator 202 (namely, the second floating metal antenna) and the printed circuit board 70 may range from 2.6 mm to 3.0 mm. For example, the distance between the first floating metal antenna and the printed circuit board 70 and the distance between the second floating metal antenna and the printed circuit board 70 may be 2.7 mm, 2.8 mm, 2.9 mm, or the like. This is not limited in embodiments of this application, and is not limited to the foregoing example. A distance L3 between a first coupling feeding element 101 (for example, a bracket in the first coupling feeding element 101) and the second radiator 202 (namely, the second floating metal antenna) may range from 0.1 mm to 0.5 mm. For example, the distance L3 between the first coupling feeding element 101 and the second floating metal antenna may be 0.2 mm, 0.3 mm, 0.5 mm, or the like. This is not limited in embodiments of this application, and is not limited to the foregoing example. In addition, in a possible implementation, in a simulation model diagram of the antenna apparatus 100 shown in FIG. 3B, the frame 222 (the metal frame) in the antenna apparatus 100 is grounded and does not radiate.

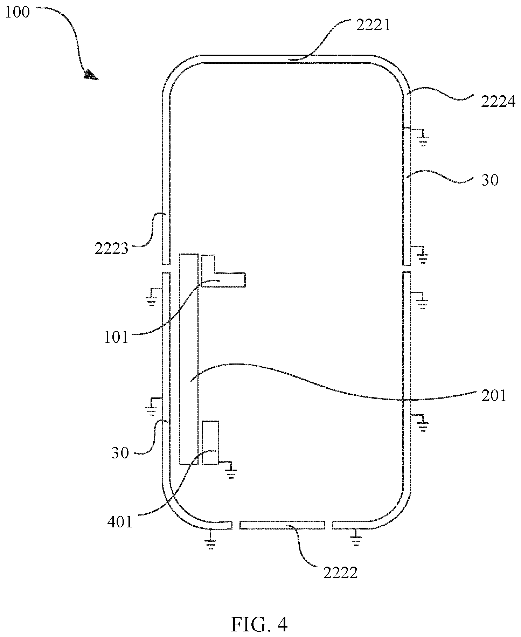

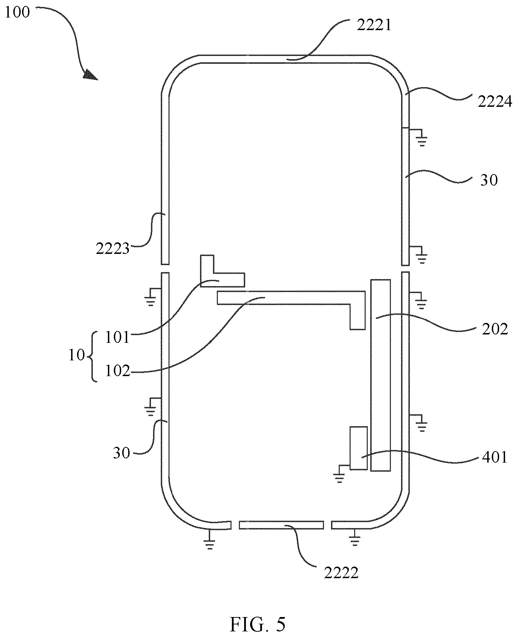

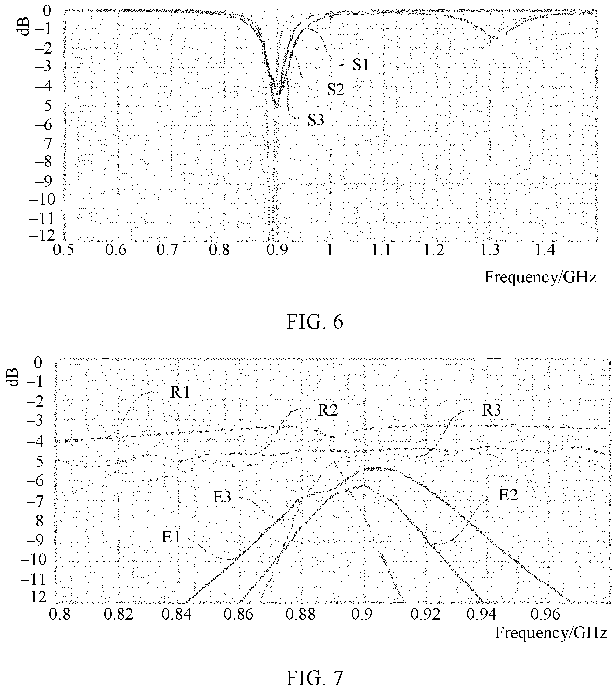

Based on the foregoing description, to further reflect advantages of the antenna apparatus 100, embodiments of this application further provide the antenna apparatus 100 whose radiation element 20 includes only the first radiator 201 (refer to FIG. 4) and the antenna apparatus 100 whose radiation element 20 includes only the second radiator 202 (refer to FIG. 5). In other words, FIG. 3 is a distributed radiator feeding structure, FIG. 4 is a left side single radiator feeding structure, and FIG. 5 is a right side single radiator feeding structure. FIG. 6 and FIG. 7 show performance comparison diagrams under the three antenna structures. Referring to FIG. 6, S1 shows a curve diagram of an antenna reflection coefficient changing with a frequency that corresponds to a distributed radiator feeding structure in free space (in a case that no interference is caused to the antenna apparatus 100). S2 shows a curve diagram of an antenna reflection coefficient changing with a frequency that corresponds to a left side single radiator feeding structure in free space. S3 shows a curve diagram of an antenna reflection coefficient changing with a frequency that corresponds to a right side single radiator feeding structure in free space. Referring to FIG. 7, E1 shows a curve diagram of system efficiency changing with a frequency that corresponds to a distributed radiator feeding structure in free space. E2 shows a curve diagram of system efficiency changing with a frequency that corresponds to a left side single radiator feeding structure in free space. E3 shows a curve diagram of system efficiency changing with a frequency that corresponds to a right side single radiator feeding structure in free space. R1 shows a curve diagram of radiation efficiency changing with a frequency that corresponds to a distributed radiator feeding structure in free space. R2 shows a curve diagram of radiation efficiency changing with a frequency that corresponds to a left side single radiator feeding structure in free space. R3 shows a curve diagram of radiation efficiency changing with a frequency that corresponds to a right side single radiator feeding structure in free space. It may be learned from the figure that compared with the single radiator feeding structure, the distributed radiator feeding structure improves the radiation efficiency by more than 1.5 dB, and a bandwidth (a bandwidth occupied by signals) of the distributed radiator feeding structure is about doubled.

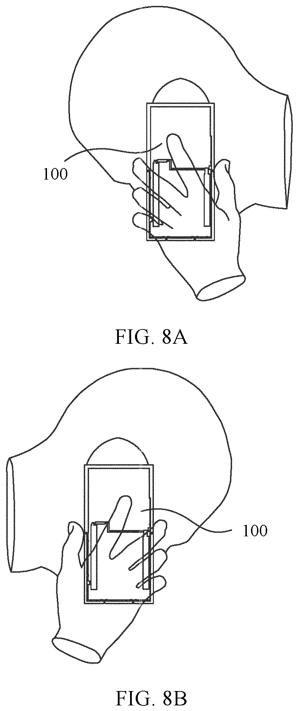

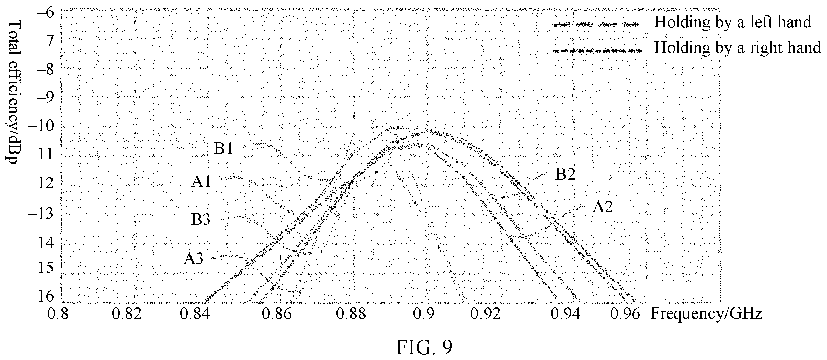

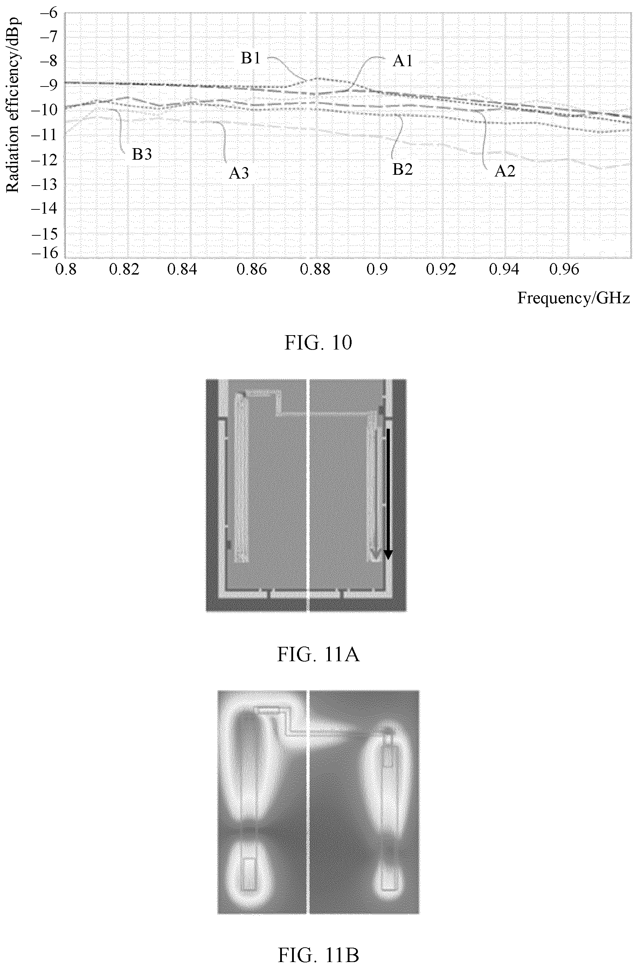

In addition, based on head-hand performance of the three antenna apparatuses 100 in an actual scenario, in other words, the electronic device such as the mobile phone 200 is held close to the head by hand, where the mobile phone 200 has an application evaluation of the antenna apparatus 100 that the mobile phone 200 is held close to a left ear by a left hand (refer to FIG. 8A), and the mobile phone 200 is held close to a right ear by a right hand (refer to FIG. 8B). As shown in FIG. 9 and FIG. 10, A1 shows a curve diagram corresponding to a distributed radiator feeding structure when a mobile phone 200 is held close to a left ear by a left hand. A2 shows a curve diagram corresponding to a left side single radiator feeding structure when a mobile phone 200 is held close to a left ear by a left hand. A3 shows a curve diagram corresponding to a right side single radiator feeding structure when a mobile phone 200 is held close to a left ear by a left hand. B1 shows a curve diagram corresponding to a distributed radiator feeding structure when a mobile phone 200 is held close to a right ear by a right hand. B2 shows a curve diagram corresponding to a left side single radiator feeding structure when a mobile phone 200 is held close to a right ear by a right hand. B3 shows a curve diagram corresponding to a right side single radiator feeding structure when a mobile phone 200 is held close to a right ear by a right hand. It may be learned from the figure that head-hand performance of the distributed feeding structure is more balanced, and compared with the single feeding structure, the distributed feeding structure also has a better head-to-head performance efficiency bandwidth.

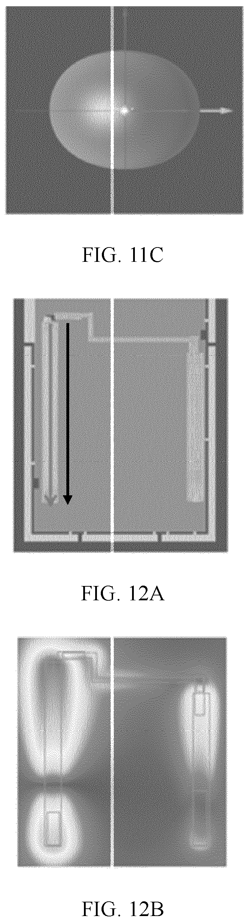

In addition, FIG. 11A, FIG. 11B, and FIG. 11C are respectively a current distribution diagram, an electric field distribution diagram, and a radiation pattern corresponding to an antenna apparatus 100 at 0.88 GHz corresponding to a distributed feeding structure. FIG. 12A, FIG. 12B, and FIG. 12C are respectively a current distribution diagram, an electric field distribution diagram, and a radiation pattern corresponding to an antenna apparatus 100 at 0.92 GHz corresponding to a distributed feeding structure. After analyzing the current distribution diagram, the electric field distribution diagram, and the radiation pattern corresponding to the two resonances (0.88 GHz and 0.92 GHz) of the antenna apparatus 100 corresponding to the distributed feeding structure, it may be found that a low resonance is mainly generated by a second radiator 202 on a right side, and a high resonance is generated by a first metal radiator on a left side.

### Embodiment 2

Different from the foregoing Embodiment 1, still referring to FIG. 13, one end of a first radiator 201 may extend toward a top frame of a middle frame 22, and one end of a second radiator 202 may extend toward a bottom frame of the middle frame 22. In addition, an orthographic projection of one low-frequency antenna towards a battery cover 25 may be opposite to the first radiator 201, and the orthographic projection of the one low-frequency antenna towards the battery cover 25 and the first radiator 201 may be respectively located on two sides of an orthographic projection of a battery 24 towards the battery cover 25. An orthographic projection of another low-frequency antenna towards the battery cover 25 may be opposite to the second radiator 202, and the orthographic projection of another low-frequency antenna towards the battery cover 25 and the second radiator 202 may be respectively located on two sides of the orthographic projection of the battery 24 towards the battery cover 25.

Specifically, still referring to FIG. 13, the first radiator 201 is arranged diagonally opposite to the second radiator 202, the first radiator 201 is arranged opposite to one low-frequency antenna along a central axis in a length direction of the frame, and the second radiator 202 is arranged opposite to another low-frequency antenna along the central axis in the length direction of the frame. One low-frequency antenna is arranged diagonally opposite to another low-frequency antenna. In this way, both the radiator (the first radiator 201 or the second radiator 202) and the metal frame antennas 30 (the two low-frequency antennas) are separately arranged, so that the radiator (the first radiator 201 or the second radiator 202) is far away from the metal frame antennas 30 in terms of spatial positions, and isolation between the first radiator 201 and the metal frame antennas 30 and between the second radiator 202 and the metal frame antenna 30 may be increased. In this way, an isolation effect between antenna modules in the antenna apparatus 100 may be effectively improved, and further, it may be ensured that the first radiator 201 and the second radiator 202 do not cause interference to the metal frame antennas 30 (the two low-frequency antennas).

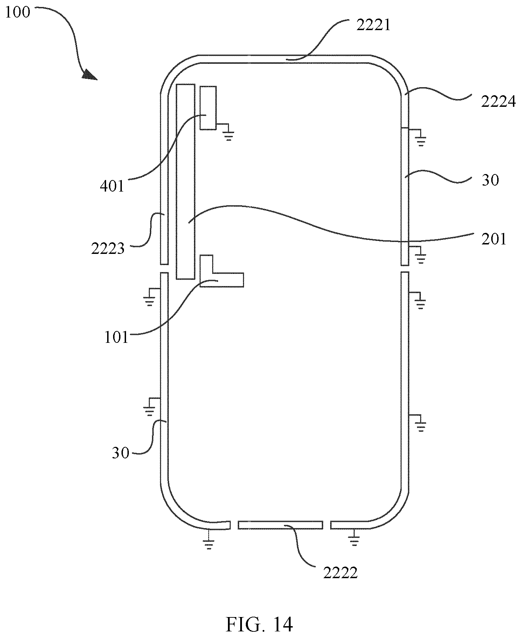

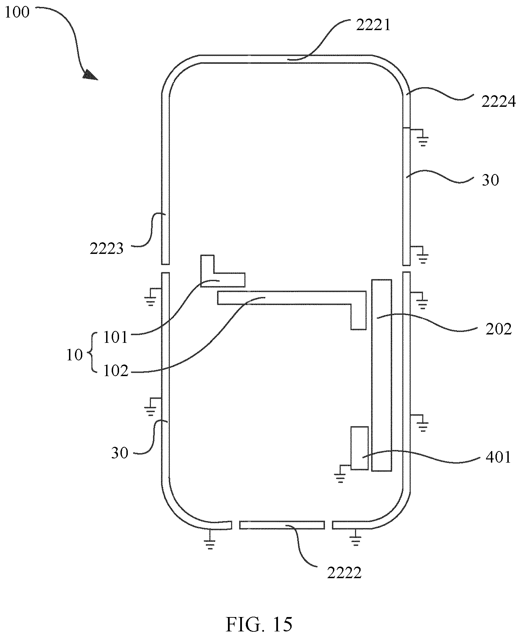

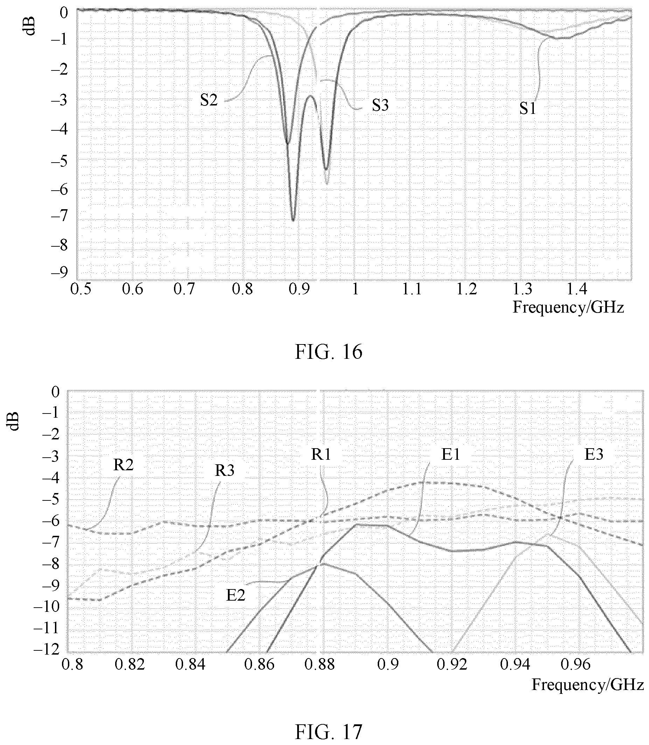

Similarly, based on the foregoing description, to further reflect advantages of the antenna apparatus 100, embodiments of this application further provide the antenna apparatus 100 whose radiation element 20 includes only the first radiator 201 (refer to FIG. 14) and the antenna apparatus 100 whose radiation element 20 includes only the second radiator 202 (refer to FIG. 15). In other words, FIG. 13 is a distributed radiator feeding structure, FIG. 14 is a left side single radiator feeding structure, and FIG. 15 is a right side single radiator feeding structure. Performance of the three antenna structures is also compared. Referring to FIG. 16, S1 shows a curve diagram of an antenna reflection coefficient changing with a frequency that corresponds to a distributed radiator feeding structure in free space (in a case that no interference is caused to the antenna apparatus 100). S2 shows a curve diagram of an antenna reflection coefficient changing with a frequency that corresponds to a left side single radiator feeding structure in free space. S3 shows a curve diagram of an antenna reflection coefficient changing with a frequency that corresponds to a right side single radiator feeding structure in free space. Referring to FIG. 17, E1 shows a curve diagram of system efficiency changing with a frequency that corresponds to a distributed radiator feeding structure in free space. E2 shows a curve diagram of system efficiency changing with a frequency that corresponds to a left side single radiator feeding structure in free space. E3 shows a curve diagram of system efficiency changing with a frequency that corresponds to a right side single radiator feeding structure in free space. R1 shows a curve diagram of radiation efficiency changing with a frequency that corresponds to a distributed radiator feeding structure in free space. R2 shows a curve diagram of radiation efficiency changing with a frequency that corresponds to a left side single radiator feeding structure in free space. R3 shows a curve diagram of radiation efficiency changing with a frequency that corresponds to a right side single radiator feeding structure in free space. It may be learned from the figure that compared with the single radiator feeding structure, the distributed radiator feeding structure improves efficiency by nearly 2 dB, and a bandwidth (a bandwidth occupied by signals) of the distributed radiator feeding structure is more than doubled.

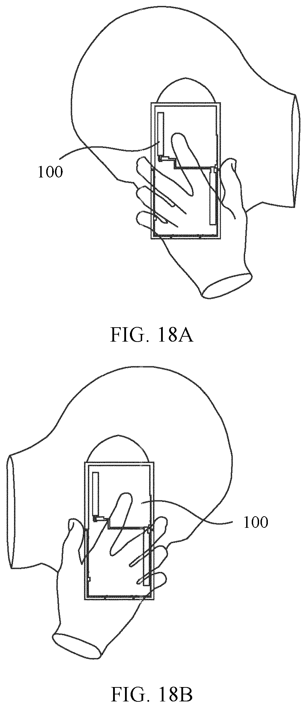

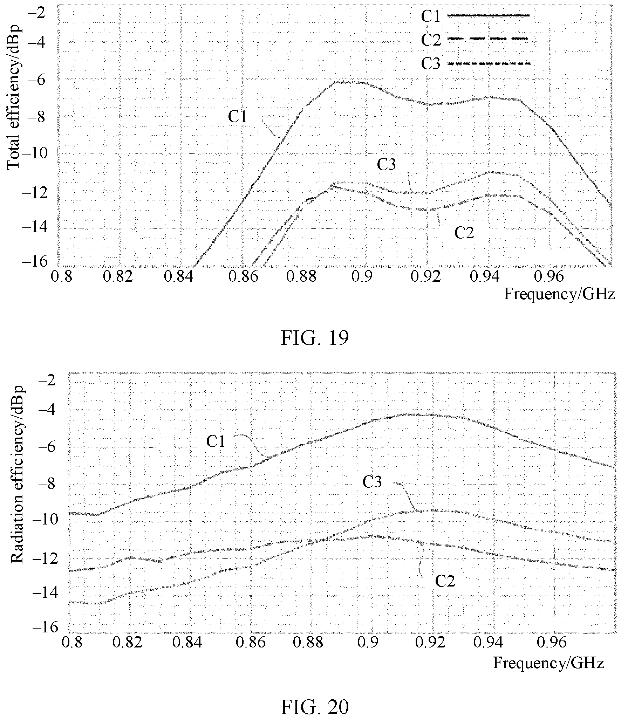

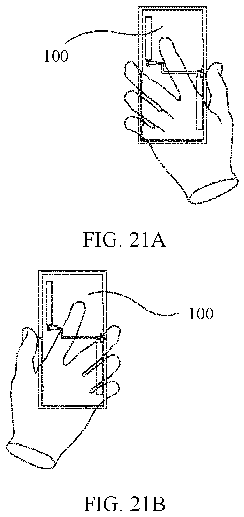

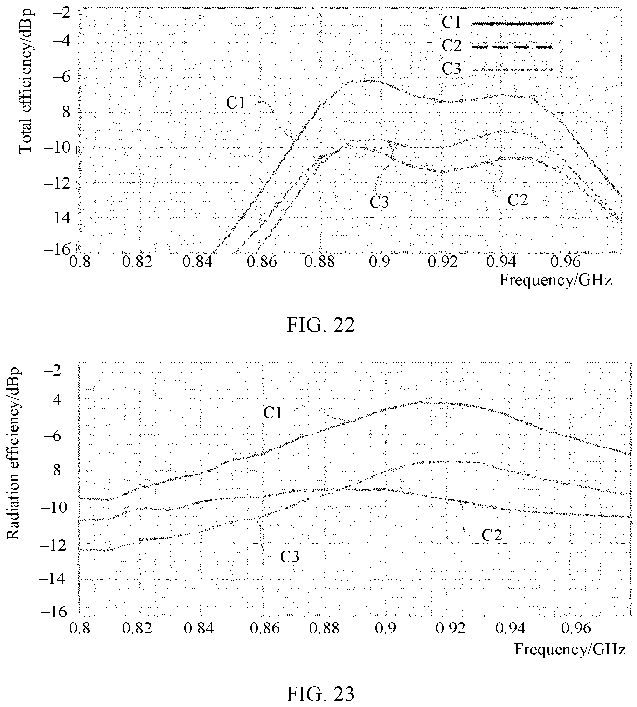

In addition, based on head-hand performance of the antenna apparatus 100 corresponding to the distributed radiator feeding structure shown in FIG. 13 in the actual application scenario, namely, a simulation evaluation of the electronic device such as the mobile phone 200 being held close to a head by hand, the mobile phone 200 being held close to a left ear by a left hand (refer to FIG. 18A), and the mobile phone 200 being held close to a right ear by a right hand (refer to FIG. 18B), and based on hand holding performance of the antenna apparatus 100 corresponding to the distributed radiator feeding structure shown in FIG. 13 in the actual application scenario, namely, a hand holding electronic device, such as the mobile phone 200, and a simulation evaluation of the mobile phone 200 being held by a left hand (refer to FIG. 21A), and the mobile phone 200 being held by a right hand (refer to FIG. 21B) are respectively shown in FIG. 19 and FIG. 20, and FIG. 22 and FIG. 23. In FIG. 19 and FIG. 20, C1 shows a corresponding curve diagram in a free space state, C2 shows a corresponding curve diagram when a mobile phone 200 is held close to a left ear by a left hand, and C3 shows a corresponding curve diagram when a mobile phone 200 is held close to a right ear by a right hand. In FIG. 22 and FIG. 23, C1 shows a corresponding curve diagram in a free space state, C2 shows a corresponding curve diagram when a mobile phone 200 is held by a left hand, and C3 shows a corresponding curve diagram when a mobile phone 200 is held by a right hand. It may be learned from the figure that left and right head-hand performance and left and right hand holding performance of the distributed radiator feeding structure are balanced, and a difference is less than 1 dB.

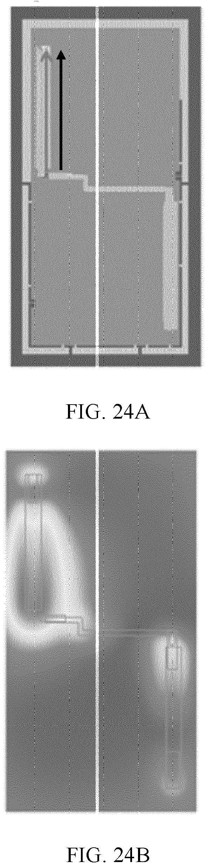

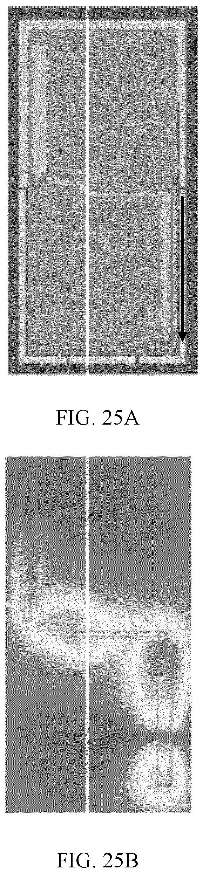

In addition, FIG. 24A and FIG. 24B are respectively a current distribution diagram and an electric field distribution diagram corresponding to an antenna apparatus 100 at 0.89 GHz corresponding to a distributed feeding structure. FIG. 25A and FIG. 25B are respectively a current distribution diagram and an electric field distribution diagram corresponding to an antenna apparatus 100 at 0.95 GHz corresponding to a distributed feeding structure. After analyzing the current distribution diagram and the electric field distribution diagram corresponding to the two resonances (0.89 GHz and 0.95 GHz) of the antenna apparatus 100 corresponding to the distributed radiator feeding structure, it may be found that a low resonance is mainly generated by a first radiator 201 on a left side, and a high resonance is generated by a second radiator 202 on a right side.

In addition, when the metal frame antenna 30 also radiates, an example in which the first radiator 201 and the second radiator 202 are low-frequency antennas is used. As shown in FIG. 13, the distributed antennas (the first radiator 201 and the second radiator 202) and the two low-frequency antennas (the metal frame antennas 30) operate in a same frequency band.

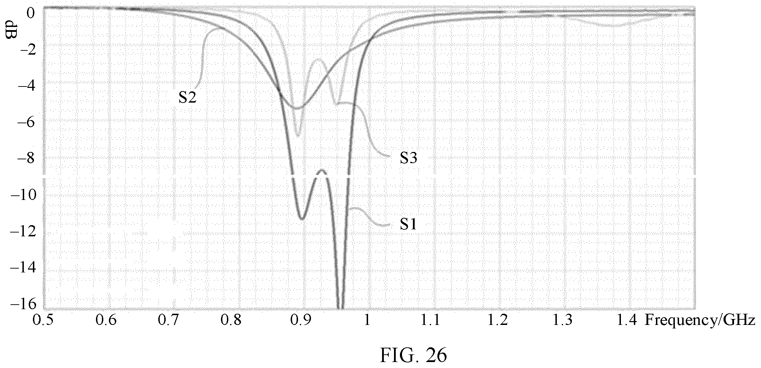

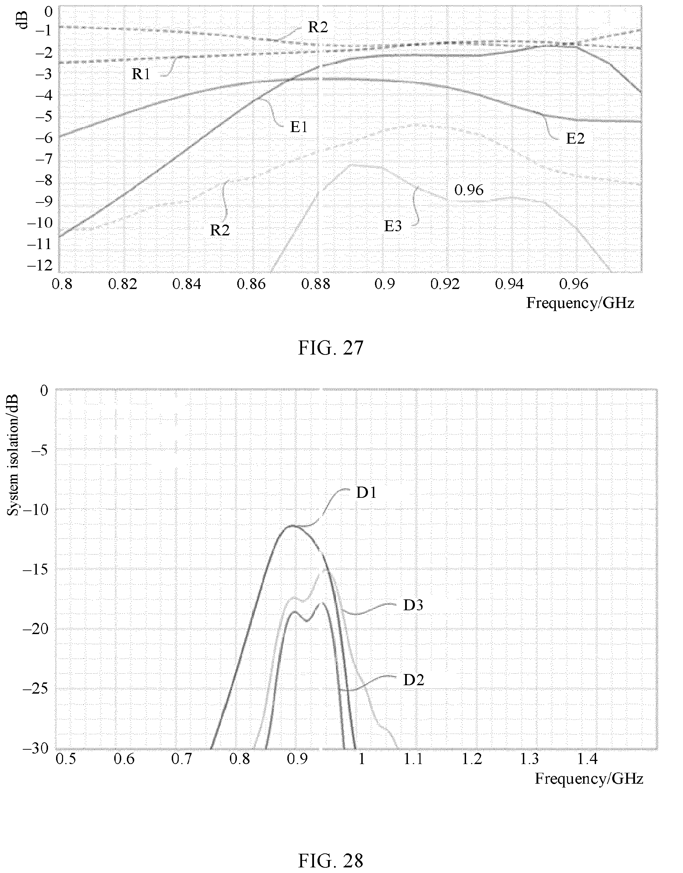

For example, in FIG. 13, using an example in which a metal frame antenna 30 on a left side is used as a first low-frequency antenna (ant1), a metal frame antenna 30 on a right side is used as a second low-frequency antenna (ant2), and the first radiator 201 and the second radiator 202 are used as third low-frequency antennas (ant3). FIG. 26 and FIG. 27 show antenna reflection coefficient curves and efficiency curves of the three low-frequency antennas in free space. S1 shows a curve diagram of an antenna reflection coefficient corresponding to a first low-frequency antenna. S2 shows a curve diagram of an antenna reflection coefficient corresponding to a second low-frequency antenna. S3 shows a curve diagram of an antenna reflection coefficient corresponding to a third low-frequency antenna. E1 shows a curve diagram of system efficiency corresponding to a first low-frequency antenna. E2 shows a curve diagram of system efficiency corresponding to a second low-frequency antenna. E3 shows a curve diagram of system efficiency corresponding to a third low-frequency antenna. R1 shows a curve diagram of radiation efficiency corresponding to a first low-frequency antenna. R2 shows a curve diagram of radiation efficiency corresponding to a second low-frequency antenna. R3 shows a curve diagram of radiation efficiency corresponding to a third low-frequency antenna. It may be learned from the figure that performance of the three low-frequency antennas is normal in a co-frequency state.

In addition, FIG. 28 is a curve diagram of system isolation corresponding to the three low-frequency antennas. D1 shows a curve diagram corresponding to system isolation between a second low-frequency antenna and a first low-frequency antenna. D2 shows a curve diagram corresponding to system isolation between a third low-frequency antenna and a first low-frequency antenna. D3 shows a curve diagram corresponding to system isolation between a third low-frequency antenna and a second low-frequency antenna. It may be learned from the figure that system isolation between every two of the three antennas is greater than 12 dB. To be specific, it indicates that radiation performance of the antenna apparatus 100 shown in FIG. 13 is very good.

| ECC at 0.89 GHz/0.95 GHz | ant1 | ant2 | ant3 |
|---|---|---|---|
| ant1 | | | |
| ant2 | 0.14/0.1 | | |
| ant3 | 0.15/0.13 | 0.23/0.47 | |

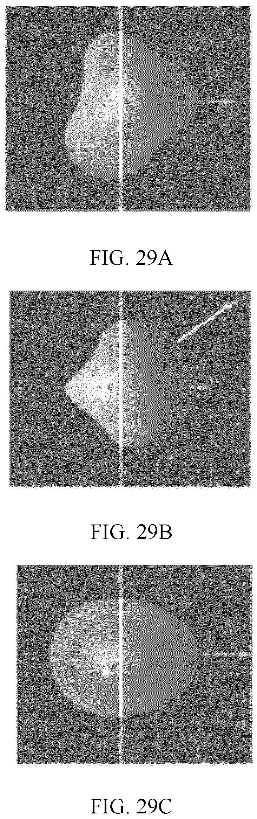

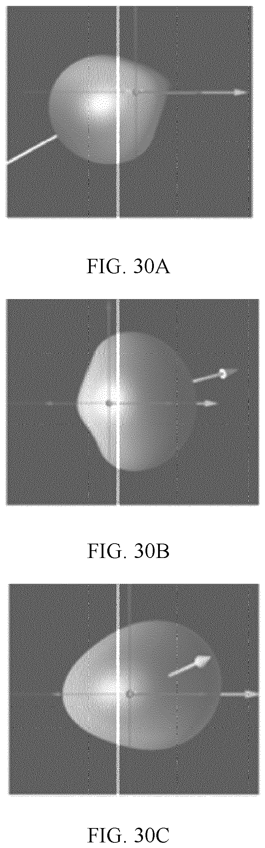

FIG. 29A, FIG. 29B, and FIG. 29C respectively show radiation patterns of the three low-frequency antennas at 0.89 GHz. FIG. 30A, FIG. 30B, and FIG. 30C respectively show radiation patterns of the three low-frequency antennas at 0.95 GHz. In addition, envelope correlation coefficients (Envelope Correlation Coefficient, ECC) of the foregoing three low-frequency antennas at two frequencies are shown in the foregoing table. Similarly, the first radiator 201 and the second radiator 202 in FIG. 13 are used as the third low-frequency antenna (ant3). The metal frame antenna 30 on the left side is used as the first low-frequency antenna (ant1), and the metal frame antenna 30 on the right side is used as the second low-frequency antenna (ant2). It may be learned from the foregoing table that the ECCs of the three low-frequency antennas at two frequencies (0.89 GHz and 0.95 GHz) are all less than 0.5. Therefore, it may be learned that the distributed antenna design shown in FIG. 13 is a good MIMO antenna design scheme.

In embodiments of this application, other technical features are the same as those in Embodiment 1, and a same or corresponding technical effect may be achieved. Details are not described herein again.

### Embodiment 3

Different from the foregoing Embodiment 1 or Embodiment 2, the radiator in embodiments of this application is a medium and high frequency radiator. For example, a length of the radiator may be reduced to implement an increase of a frequency band. Two medium and high frequency radiators (for example, floating metal antennas) are located on a left side and a right side, and a connection is implemented through a coupling feeding element 10 (for example, a floating metal). Specifically, compared with Embodiment 1, referring to FIG. 31A, both a length of a first radiator 201 and a length of a second radiator 202 are shortened. In embodiments of this application, an operating frequency band of the first radiator 201 and an operating frequency band of the second radiator 202 are improved by shortening the length of the first radiator 201 and the length of the second radiator 202. Specifically, with reference to FIG. 3 and FIG. 31A, compared with FIG. 3, the length of the first radiator 201 and the length of the second radiator 202 in the antenna apparatus 100 shown in FIG. 31A are short.

In embodiments of this application, the first radiator 201 and the second radiator 202 are medium and high frequency antennas. When the first radiator 201 and the second radiator 202 are used as the medium and high frequency antennas, the operating frequency band of the first radiator 201 and the operating frequency band of the second radiator 202 may be greater than 1000 MHz. For example, the operating frequency band of the first radiator 201 and the operating frequency band of the second radiator 202 may be 1000 MHz, 1100 MHz, 1200 MHz, or the like. This is not limited in embodiments of this application, and is not limited to the foregoing example.

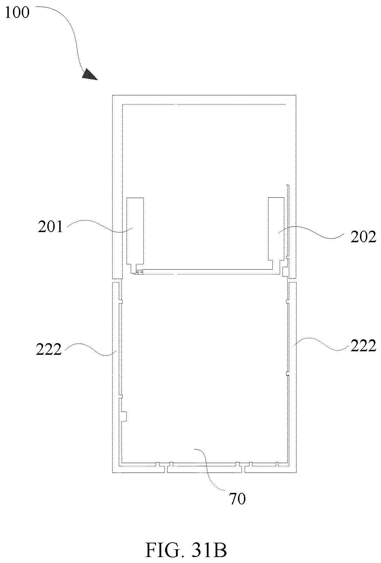

In addition, FIG. 31B is a simulation model diagram of an antenna apparatus 100 according to an embodiment of this application. The simulation model and an antenna environment are the same as or similar to those in Embodiment 1, and details are not described herein again.

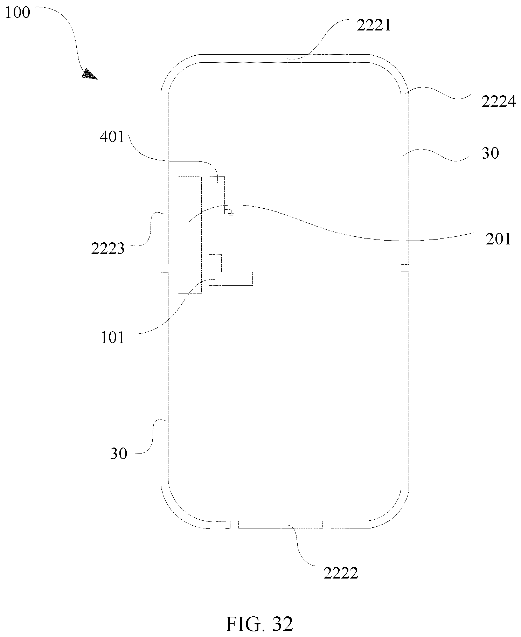

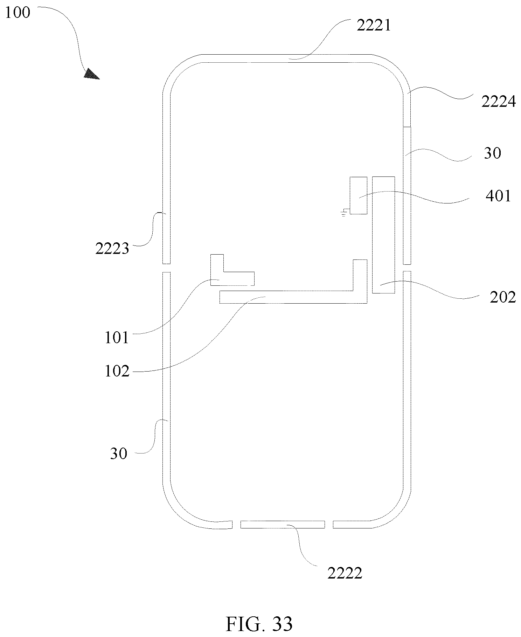

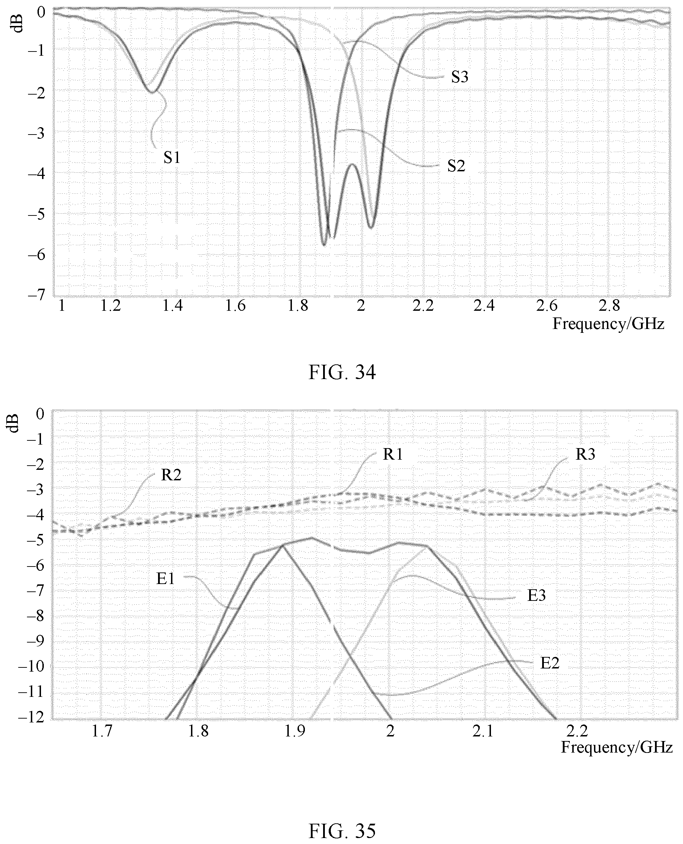

Similarly, based on the foregoing description, to further reflect advantages of the antenna apparatus 100, embodiments of this application further provide the antenna apparatus 100 whose radiation element 20 includes only the first radiator 201 (refer to FIG. 32) and the antenna apparatus 100 whose radiation element 20 includes only the second radiator 202 (refer to FIG. 33). In other words, FIG. 31A is a distributed radiator feeding structure, FIG. 32 is a left side single radiator feeding structure, and FIG. 33 is a right side single radiator feeding structure. Referring to FIG. 34, S1 shows a curve diagram of an antenna reflection coefficient changing with a frequency that corresponds to a distributed radiator feeding structure in free space (in a case that no interference is caused to the antenna apparatus 100). S2 shows a curve diagram of an antenna reflection coefficient changing with a frequency that corresponds to a left side single radiator feeding structure in free space. S3 shows a curve diagram of an antenna reflection coefficient changing with a frequency that corresponds to a right side single radiator feeding structure in free space. Referring to FIG. 35, E1 shows a curve diagram of system efficiency changing with a frequency that corresponds to a distributed radiator feeding structure in free space. E2 shows a curve diagram of system efficiency changing with a frequency that corresponds to a left side single radiator feeding structure in free space. E3 shows a curve diagram of system efficiency changing with a frequency that corresponds to a right side single radiator feeding structure in free space. R1 shows a curve diagram of radiation efficiency changing with a frequency that corresponds to a distributed radiator feeding structure in free space. R2 shows a curve diagram of radiation efficiency changing with a frequency that corresponds to a left side single radiator feeding structure in free space. R3 shows a curve diagram of radiation efficiency changing with a frequency that corresponds to a right side single radiator feeding structure in free space. It may be learned from the figure that compared with the single radiator feeding structure, and a bandwidth (a bandwidth occupied by signals) of the distributed radiator feeding structure is more than doubled. In addition, two resonances of the distributed radiator feeding structure respectively correspond to resonances of two different elements of the single radiator feeding structure.

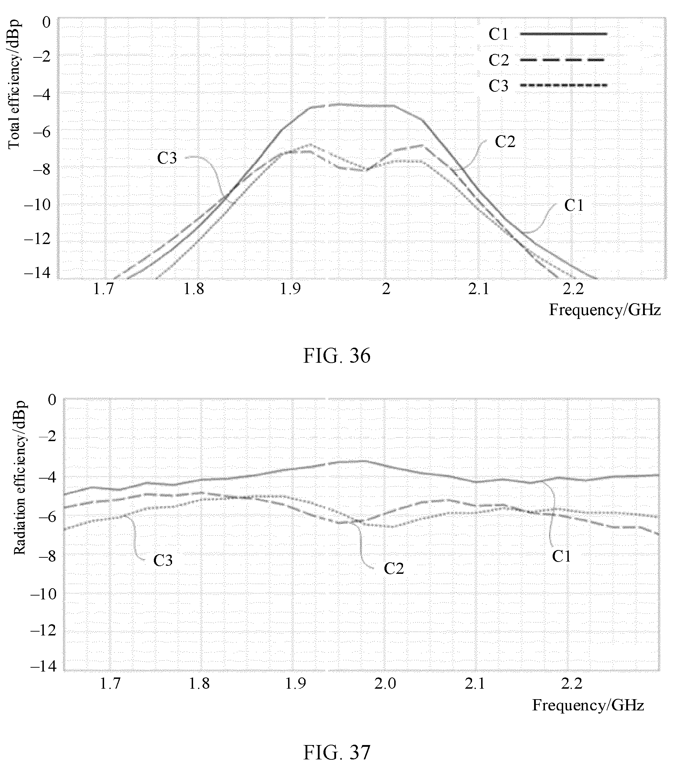

In addition, FIG. 36 and FIG. 37 show antenna performance corresponding to a distributed radiator feeding structure held by a left hand and a right hand. There is an application evaluation of hand holding performance of the antenna apparatus 100 shown in FIG. 31A in an actual scenario (to be specific, holding the electronic device such as a mobile phone 200 by hand, holding a mobile phone 200 by a left hand, or holding a mobile phone 200 by a right hand). As shown in FIG. 36 and FIG. 37, C1 shows a corresponding curve diagram in a free space state. C2 shows a corresponding curve diagram in a state of holding a mobile phone 200 by a left hand. C3 shows a corresponding curve diagram in a state of holding a mobile phone 200 by a right hand. It may be learned from the figure that in a case of left hand holding and right hand holding, efficiency is only 2 dB to 3 dB lower than efficiency in the free space state, and the efficiency is balanced.

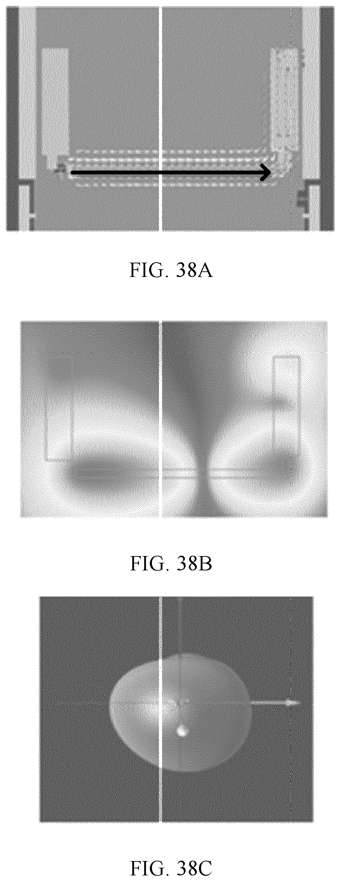

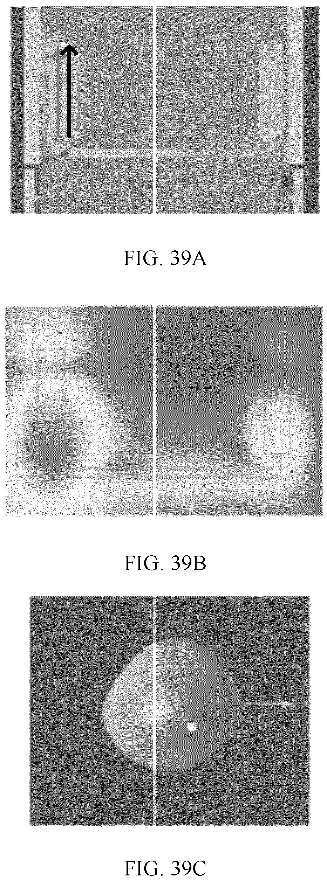

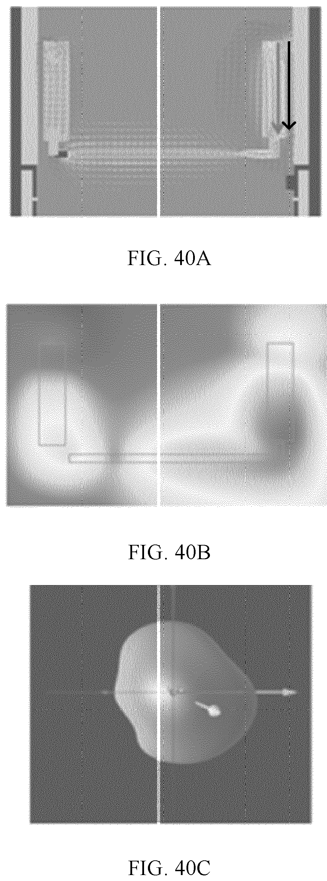

In addition, FIG. 38A, FIG. 38B, and FIG. 38C are respectively a current distribution diagram, an electric field distribution diagram, and a radiation pattern corresponding to an antenna apparatus 100 at 1.3 GHz corresponding to a distributed feeding structure. FIG. 39A, FIG. 39B, and FIG. 39C are respectively a current distribution diagram, an electric field distribution diagram, and a radiation pattern corresponding to an antenna apparatus 100 at 1.9 GHz corresponding to a distributed feeding structure. FIG. 40A, FIG. 40B, and FIG. 40C are respectively a current distribution diagram, an electric field distribution diagram, and a radiation pattern corresponding to an antenna apparatus 100 at 2.01 GHz corresponding to a distributed feeding structure. After analyzing the current distribution diagram and the electric field distribution diagram corresponding to the three resonances of the antenna apparatus 100 corresponding to the distributed feeding structure, it is found that two high-frequency resonances are respectively generated by a first radiator 201 on a left side and a second radiator 202 on a right side. However, a low resonance is generated by a feeding branch in a coupling feeding element 10, and when an environment of the feeding branch is good, a length of the feeding branch may be adjusted, and may also be used to design a low-frequency antenna.

| | | Antenna apparatus shown in FIG. 32 | Antenna apparatus shown in FIG. 31A | |
|---|---|---|---|---|
| Input power 24 dBm | Resonant frequency | 1.88 GHz | 1.9 GHz | 2.01 GHz |
| | | 10 g | 10g | 10 g |
| | FS simulation efficiency (dB) | -5.10 | -4.90 | -5.10 |
| Simulation body SAR | Back -5 mm | 3.12 | 2.54 | 1.92 |
| Normalized efficiency | FS normalization (dB) | -5 | -5 | -5 |
| Normalized body SAR | Back -5 mm | 3.19 | 2.48 | 1.96 |

In addition, in the foregoing table, a 5 mm body SAR (electromagnetic radiation energy absorbed by a matter per unit mass and per unit time, measuring a thermal effect of terminal radiation) on a lower back surface of each of the two antenna structures such as the antenna apparatus 100 (a double resonance structure) shown in FIG. 31A and the antenna apparatus 100 (a single resonance structure) shown in FIG. 32 is compared. Through a distributed radiator feeding structure (the antenna apparatus 100 shown in FIG. 31A), compared with a single radiator feeding structure (for example, the left side single radiator feeding structure shown in FIG. 32), an SAR value of the single radiator feeding structure decreases by about 1 dB to 2 dB.

In embodiments of this application, other technical features are the same as those in Embodiment 1 or Embodiment 2, and a same or corresponding technical effect may be achieved. Details are not described herein again.

### Embodiment 4

Different from Embodiment 1, Embodiment 2, or Embodiment 3, in embodiments of this application, a radiator may feed and be connected to a metal frame antenna 30, and the radiator and the metal frame antenna 30 are combined to implement distributed feeding.

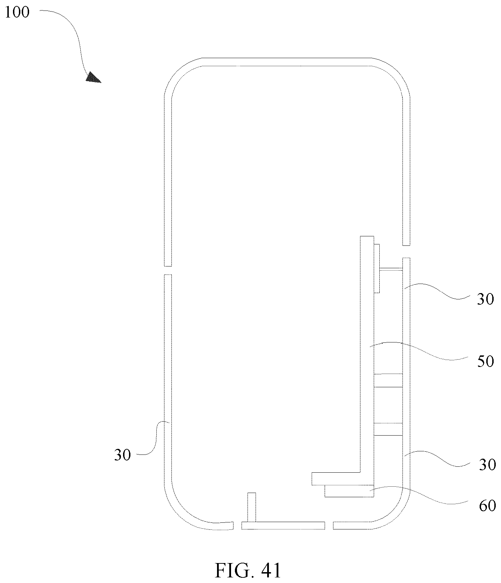

Embodiments of this application provide an electronic device. The electronic device includes: at least a middle frame 22 (a metal middle frame), a battery cover 25, and a battery 24 located between the metal middle frame and the battery cover 25, and further includes: an antenna apparatus 100. Specifically, referring to FIG. 41, the antenna apparatus 100 includes: a coupling radiation element 50, a feeding element 60, and at least three low-frequency antennas formed by a metal frame of the metal middle frame; and the coupling radiation element 50 is arranged close to one of the low-frequency antennas, one end of the feeding element 60 is coupled to and feeds the coupling radiation element 50, and another end of the feeding element 60 feeds one of the low-frequency antennas.

At least three low-frequency antennas are formed through the metal frame of the metal middle frame, a coupling radiation element 50 in an antenna apparatus 100 is arranged close to one of the low-frequency antennas, and one end of the feeding element 60 in the antenna apparatus 100 is coupled to and feeds the coupling radiation element 50. Another end of the feeding element 60 feeds one of the at least three low-frequency antennas. In this way, distributed feeding may be implemented by feeding and being connected to a metal frame antenna 30 through the coupling radiation element 50. This improves radiation performance of the antenna apparatus 100. In addition, design difficulty of the entire antenna apparatus 100 may be reduced to some extent.

The coupling radiation element 50 may include: at least one coupling radiator, and the coupling radiator is arranged on an inner surface of the battery cover 25; and the feeding element 60 is located between the coupling radiator and the low-frequency antenna, one end of the feeding element 60 is coupled to and feeds the coupling radiator, and another end of the feeding element 60 feeds the low-frequency antenna.

In a possible implementation, at least some coupling radiators are located between orthographic projection of one side frame of the middle frame 22 and the battery 24 towards the battery cover 25. In other words, a part or all of the structure of the coupling radiator is located between the side frame (a left side frame 2223 or a right side frame 2224) and an outer edge of the battery 24 (an outer edge of the battery 24 close to a side of the side frame). In this way, a part or all of the structure of the coupling radiator is not located in an orthographic projection area of the battery 24 towards the battery cover 25. In this case, the battery 24 does not block the coupling radiator or may block only a part of the structure of the coupling radiator. This avoids impact or interference on radiation performance that blocks the coupling radiator.

In embodiments of this application, the feeding element 60 is electrically connected to a feed, one end of the feeding element 60 is coupled to and feeds the coupling radiator, and another end of the feeding element 60 is electrically connected to the low-frequency antenna through a feeding cable, so that the feeding element 60 feeds the low-frequency antenna. In this way, an external feed feeds the feeding element 60, the feeding element 60 is coupled to and feeds the coupling radiator, and the feeding element 60 feeds the low-frequency antenna through a feeding cable. In this way, a process of feeding the coupling radiator and the low-frequency antenna through the feed is implemented. It may be understood that a feeding form may be implemented through a wired cable (for example, a cable), a transmission cable, a floating metal structure, or the like. The feeding form in embodiments of this application includes but is not limited to the foregoing examples, and may be specifically flexibly set based on a requirement of an actual application scenario.

The feeding element 60 includes: a bracket and a feeding branch arranged on the bracket, where the feeding branch is electrically connected to the feed; and the bracket is fixed on the inner surface of the battery cover 25. The bracket is fixed on the inner surface of the battery cover 25, so that the feeding element 60 may be fixed. The feeding branch is electrically connected to the feed, so that the external feed may feed the feeding element 60. The feeding element 60 is coupled to and feeds the coupling radiator, and the feeding element 60 feeds the low-frequency antenna through the feeding cable, to implement a process of feeding the coupling radiator and the low-frequency antenna through the feed.

In embodiments of this application, the coupling radiation element 50 or the feeding element 60 may be a floating metal, a graphene layer, or a transparent conductive layer.

In addition, the antenna apparatus 100 provided in embodiments of this application may further include: at least one ground layer, where the ground layer is arranged close to one end of the coupling radiator and is coupled to and grounded with the coupling radiator; and the ground layer is further grounded to the low-frequency antenna through the feeding cable. In this way, the first radiator 201 may be coupled to and grounded with the middle frame 22 through the coupling ground layer 401 close to the first radiator 201. The coupling radiator may be coupled to and grounded with the middle frame 22 through the ground layer close to the coupling radiator, and the low-frequency antenna may be grounded to the middle frame 22.

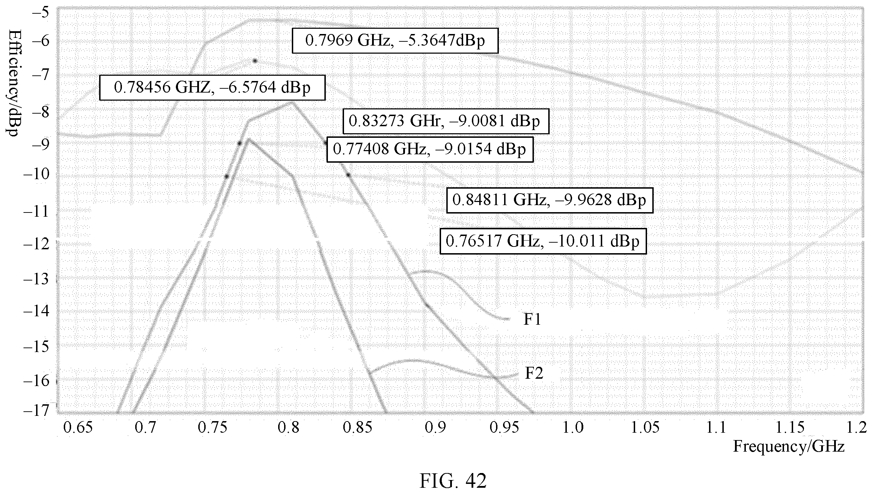

In summary, when the coupling radiator and the metal frame antenna 30 perform distributed feeding connection to improve radiation performance, referring to FIG. 42, F 1 shows a curve diagram of efficiency corresponding to a distributed feeding antenna structure (a coupling radiator+a metal frame antenna 30) shown in FIG. 41. F2 shows a curve diagram of efficiency corresponding to an antenna structure in which only a metal frame antenna 30 is fed in the conventional technology. It may be learned from the figure that compared with an antenna structure in which only the metal frame antenna 30 is fed in the conventional technology, the distributed feeding antenna structure (the coupling radiator+the metal frame antenna 30) shown in FIG. 41 may improve efficiency of the distributed feeding antenna by 1.5 dB and a bandwidth is more than doubled.

In embodiments of this application, other technical features are the same as those in Embodiment 1, Embodiment 2, or Embodiment 3, and a same or corresponding technical effect may be achieved. Details are not described herein again.

In the description of embodiments of this application, it should be noted that, unless otherwise explicitly stipulated and restricted, terms "installation", "joint connection", and "connection" should be understood broadly, which, for example, may be a fixed connection, or may be an indirect connection by using a medium, or may be an internal communication between two components, or may be an interactive relationship between two components. A person of ordinary skill in the art may understand the specific meanings of the foregoing terms in embodiments of this application according to specific situations.

In embodiments of this application, it is implied that an apparatus or element in question needs to have a particular orientation, or needs to be constructed and operated in a particular orientation, and therefore cannot be construed as a limitation on embodiments of this application. In the description of embodiments of this application, unless otherwise exactly and specifically ruled, "a plurality of" means two or more than two.

The terms such as "first", "second", "third", and "fourth" (if any) in the specification and claims of embodiments of this application and in the accompanying drawings are used for distinguishing between similar objects and not necessarily used for describing any particular order or sequence. It may be understood that the data used in such a way is interchangeable in proper circumstances, so that embodiments of this application described herein can be implemented in other sequences than the sequence illustrated or described herein. Moreover, the terms "include", "contain" and any other variants mean to cover the non-exclusive inclusion. For example, a process, method, system, product, or device that includes a list of steps or units is not necessarily limited to those steps or units, but may include other steps or units not expressly listed or inherent to such a process, method, product, or device.

## Claims

1. An electronic device (200) comprising an antenna apparatus (100), a middle frame (22), a battery cover (25), and a battery (24) located between the middle frame (22) and the battery cover (25), wherein the antenna apparatus (100) comprises:
a group of coupling feeding elements (10) and a group of radiation elements (20), wherein
the group of radiation elements (20) comprises: a first radiator (201) and a second radiator (202), wherein the first radiator (201) and the second radiator (202) are arranged on an inner surface of the battery cover (25); and
the first radiator (201) and the second radiator (202) are respectively located on two sides of the group of coupling feeding elements (10), and the group of coupling feeding elements (10) is separately coupled to and configured to feed the first radiator (201) and the second radiator (202),
wherein the middle frame (22) is a metal middle frame, the metal middle frame comprises a metal frame, and the metal frame is configured to form at least two metal frame antennas (30) in the antenna apparatus (100).

2. The electronic device (200) according to claim 1, wherein
at least one of the first radiator (201) or the second radiator (202) is located between an orthographic projection of one side frame (2223, 2224) of the middle frame (22) and the battery (24) towards the battery cover (25).

3. The electronic device (200) according to claim 2, wherein
the first radiator (201) is located between the orthographic projection of the one side frame (2223) of the middle frame (22) and the battery (24) towards the battery cover (25), and the second radiator (202) is located between the orthographic projection of another opposite side frame (2224) of the middle frame (22) and the battery (24) towards the battery cover (25).

4. The electronic device (200) according to any one of claims 1 to 3, wherein two of the at least two metal frame antennas (30) are low-frequency antennas.

5. The electronic device (200) according to claim 4, wherein one end of the first radiator (201) extends toward a top frame (2221) of the middle frame (22), and one end of the second radiator (202) extends toward a bottom frame (2222) of the middle frame (22);
an orthographic projection of one of the at least two low-frequency antennas towards the battery cover (25) is opposite to the first radiator (201), and the orthographic projection of the one of the at least low-frequency antennas towards the battery cover (25) and the first radiator (201) are respectively located on two sides of the orthographic projection of the battery (24) towards the battery cover (25); and
an orthographic projection of another one of the at least two low-frequency antennas towards the battery cover (25) is opposite to the second radiator (202), and the orthographic projection of the another one of the at least low-frequency antennas towards the battery cover (25) and the second radiator (202) are respectively located on the two sides of the orthographic projection of the battery (24) towards the battery cover (25).

6. The electronic device (200) according to claim 1, wherein one end of the first radiator (201) extends toward a bottom frame (2222) of the middle frame (22), and one end of the second radiator (202) extends toward the bottom frame (2222) of the middle frame (22); or
one end of the first radiator (201) extends toward a top frame (2221) of the middle frame (22), and one end of the second radiator (202) extends toward the top frame (2221) of the middle frame (22); or
one end of the first radiator (201) extends toward a bottom frame (2222) of the middle frame (22), and one end of the second radiator (202) extends toward a side frame (2223, 2224) of the middle frame (22).

7. The electronic device (200) according to any one of claims 1 to 6, wherein an electrical length of the first radiator (201) and an electrical length of the second radiator (202) range from 1/4 λ to 1/2 λ, wherein λ is a wavelength corresponding to a resonant frequency of each of the first radiator (201) and the second radiator (202).

8. The electronic device (200) according to claim 6, wherein the group of coupling feeding elements (10) comprises: a first coupling feeding element (101) and a second coupling feeding element (102), wherein the first coupling feeding element (101) is electrically connected to a feed (60), and the first coupling feeding element (101) is separately coupled to and configured to feed another end of the first radiator (201) and one end of the second coupling feeding element (102); and
another end of the second coupling feeding element (102) is coupled to and is configured to feed another end of the second radiator (202).

9. The electronic device (200) according to claim 8, wherein the first coupling feeding element (101) comprises: a bracket and a feeding branch arranged on the bracket, wherein the feeding branch is electrically connected to the feed (60); and the bracket is fixed on the inner surface of the battery cover (25).

10. The electronic device (200) according to claim 8, wherein the second coupling feeding element (102), the first radiator (201), and the second radiator (202) are floating metals, graphene layers, or transparent conductive layers.

11. The electronic device (200) according to any one of claims 1 to 10, wherein an operating frequency band of the first radiator (201) and an operating frequency band of the second radiator (202) is 700 MHz, 800 MHz or 900 MHz.

12. The electronic device (200) according to any one of claims 1 to 4, further comprising a group of coupling grounding elements (50), wherein the group of coupling grounding elements (50) comprises at least two coupling ground layers (401), wherein one of the at least two coupling ground layers (401) is arranged close to one end of the first radiator (201) and is coupled to and configured to ground with the first radiator (201); and
another one of the at least two coupling ground layers (401) is arranged close to one end of the second radiator (202) and is coupled to and configured to ground with the second radiator (202).

13. The electronic device (200) according to any one of claims 1 to 12, wherein the electronic device (200) is a mobile phone, and the battery cover (25) is a rear housing grounding surface of the mobile phone.

14. The electronic device (200) according to any one of claims 1 to 13, wherein the battery cover (25) is a metal battery cover, a glass battery cover, a plastic battery cover, or a ceramic battery cover.

15. The electronic device (200) according to any one of claims 1 to 13, wherein each one of the at least two metal frame antennas (30) is a groove antenna formed by providing a slot on the metal frame, the groove antenna includes a first part, a second part, and a third part that are separated by a slot, a non-conductive material is filled between the first part and the second part, between the second part and the third part, and between the third part and the first part.

## Patentansprüche

1. Elektronische Vorrichtung (200), umfassend eine Antennenvorrichtung (100), einen Mittelrahmen (22), eine Batterieabdeckung (25) und eine Batterie (24), die sich zwischen dem Mittelrahmen (22) und der Batterieabdeckung (25) befindet, wobei die Antennenvorrichtung (100) Folgendes umfasst:
eine Gruppe von Kopplungsspeisungselementen (10) und eine Gruppe von Strahlungselementen (20), wobei
die Gruppe von Strahlungselementen (20) Folgendes umfasst: einen ersten Strahler (201) und einen zweiten Strahler (202), wobei der erste Strahler (201) und der zweite Strahler (202) auf einer Innenfläche der Batterieabdeckung (25) angeordnet sind; und
sich der erste Strahler (201) und der zweite Strahler (202) jeweils auf zwei Seiten der Gruppe der Kopplungsspeisungselemente (10) befinden und die Gruppe von Kopplungsspeisungselementen (10) jeweils mit dem ersten Strahler (201) und dem zweiten Strahler (202) gekoppelt und so konfiguriert ist, dass sie diese speist,
wobei es sich bei dem Mittelrahmen (22) um einen Metallmittelrahmen handelt, der Metallmittelrahmen einen Metallrahmen umfasst und der Metallrahmen so konfiguriert ist,
dass er mindestens zwei Metallrahmenantennen (30) in der Antennenvorrichtung (100) bildet.

2. Elektronische Vorrichtung (200) nach Anspruch 1, wobei sich mindestens einer von dem ersten Strahler (201) oder dem zweiten Strahler (202) zwischen einer orthografischen Projektion eines Seitenrahmens (2223, 2224) des Mittelrahmens (22) und der Batterie (24) in Richtung der Batterieabdeckung (25) befindet.

3. Elektronische Vorrichtung (200) nach Anspruch 2, wobei sich der erste Strahler (201) zwischen der orthografischen Projektion des einen Seitenrahmens (2223) des Mittelrahmens (22) und der Batterie (24) in Richtung der Batterieabdeckung (25) befindet und sich der zweite Strahler (202) zwischen der orthografischen Projektion eines weiteren gegenüberliegenden Seitenrahmens (2224) des Mittelrahmens (22) und der Batterie (24) in Richtung der Batterieabdeckung (25) befindet.

4. Elektronische Vorrichtung (200) nach einem der Ansprüche 1 bis 3, wobei zwei der mindestens zwei Metallrahmenantennen (30) Niederfrequenzantennen sind.

5. Elektronische Vorrichtung (200) nach Anspruch 4, wobei sich ein Ende des ersten Strahlers (201) in Richtung eines oberen Rahmens (2221) des Mittelrahmens (22) erstreckt und sich ein Ende des zweiten Strahlers (202) in Richtung eines unteren Rahmens (2222) des Mittelrahmens (22) erstreckt;
sich eine orthografische Projektion einer der mindestens zwei Niederfrequenzantennen in Richtung der Batterieabdeckung (25) dem ersten Strahler (201) gegenüberliegend befindet und sich die orthografische Projektion der einen der mindestens zwei Niederfrequenzantennen in Richtung der Batterieabdeckung (25) und des ersten Strahlers (201) jeweils auf zwei Seiten der orthografischen Projektion der Batterie (24) in Richtung der Batterieabdeckung (25) befinden; und
sich eine orthografische Projektion einer weiteren der mindestens zwei Niederfrequenzantennen in Richtung der Batterieabdeckung (25) dem zweiten Strahler (202) gegenüberliegend befindet und sich die orthografische Projektion einer weiteren der mindestens zwei Niederfrequenzantennen in Richtung der Batterieabdeckung (25) und des zweiten Strahlers (202) jeweils auf den zwei Seiten der orthografischen Projektion der Batterie (24) in Richtung der Batterieabdeckung (25) befinden.

6. Elektronische Vorrichtung (200) nach Anspruch 1, wobei sich ein Ende des ersten Strahlers (201) in Richtung eines unteren Rahmens (2222) des Mittelrahmens (22) erstreckt und sich ein Ende des zweiten Strahlers (202) in Richtung des unteren Rahmens (2222) des Mittelrahmens (22) erstreckt; oder
sich ein Ende des ersten Strahlers (201) in Richtung eines oberen Rahmens (2221) des Mittelrahmens (22) erstreckt und sich ein Ende des zweiten Strahlers (202) in Richtung des oberen Rahmens (2221) des Mittelrahmens (22) erstreckt; oder
sich ein Ende des ersten Strahlers (201) in Richtung eines unteren Rahmens (2222) des Mittelrahmens (22) erstreckt und sich ein Ende des zweiten Strahlers (202) in Richtung eines seitlichen Rahmens (2223, 2224) des Mittelrahmens (22) erstreckt.

7. Elektronische Vorrichtung (200) nach einem der Ansprüche 1 bis 6, wobei die elektrische Länge des ersten Strahlers (201) und die elektrische Länge des zweiten Strahlers (202) im Bereich von 1/4 λ bis 1/2 A liegen, wobei λ eine Wellenlänge ist, die einer Resonanzfrequenz sowohl des ersten Strahlers (201) als auch des zweiten Strahlers (202) entspricht.

8. Elektronische Vorrichtung (200) nach Anspruch 6, wobei die Gruppe von Kopplungsspeisungselementen (10) Folgendes umfasst:
ein erstes Kopplungsspeisungselement (101) und ein zweites Kopplungsspeisungselement (102), wobei das erste Kopplungsspeisungselement (101) elektrisch mit einer Speisung (60) verbunden ist und das erste Kopplungsspeisungselement (101) separat mit einem weiteren Ende des ersten Strahlers (201) und einem Ende des zweiten Kopplungsspeisungselements (102) gekoppelt und dazu konfiguriert ist, dieses zu speisen; und
ein weiteres Ende des zweiten Kopplungsspeisungselements (102) mit einem weiteren Ende des zweiten Strahlers (202) gekoppelt und dazu konfiguriert ist, dieses zu speisen.

9. Elektronische Vorrichtung (200) nach Anspruch 8, wobei das erste Kopplungsspeisungselement (101) Folgendes umfasst: eine Halterung und einen auf der Halterung angeordneten Speisungszweig, wobei der Speisungszweig elektrisch mit der Speisung (60) verbunden ist; und die Halterung an der Innenfläche der Batterieabdeckung (25) befestigt ist.

10. Elektronische Vorrichtung (200) nach Anspruch 8, wobei das zweite Kopplungsspeisungselement (102), der erste Strahler (201) und der zweite Strahler (202) aus schwimmenden Metallen, Graphenschichten oder transparenten leitfähigen Schichten bestehen.

11. Elektronische Vorrichtung (200) nach einem der Ansprüche 1 bis 10, wobei das Betriebsfrequenzband des ersten Strahlers (201) und das Betriebsfrequenzband des zweiten Strahlers (202) 700 MHz, 800 MHz oder 900 MHz beträgt.

12. Elektronische Vorrichtung (200) nach einem der Ansprüche 1 bis 4, ferner umfassend eine Gruppe von Kopplungserdungselementen (50), wobei die Gruppe von Kopplungserdungselementen (50) mindestens zwei Kopplungserdungsschichten (401) umfasst, wobei eine der mindestens zwei Kopplungserdungsschichten (401) in der Nähe eines Endes des ersten Strahlers (201) angeordnet ist und mit dem ersten Strahler (201) gekoppelt und dazu konfiguriert ist, sich mit diesem zu erden; und
eine weitere der mindestens zwei Kopplungserdungsschichten (401) in der Nähe eines Endes des zweiten Strahlers (202) angeordnet ist und mit dem zweiten Strahler (202) gekoppelt und dazu konfiguriert ist, sich mit diesem zu erden.

13. Elektronische Vorrichtung (200) nach einem der Ansprüche 1 bis 12, wobei die elektronische Vorrichtung (200) ein Mobiltelefon ist und die Batterieabdeckung (25) eine hintere Gehäuseerdungsfläche des Mobiltelefons ist.

14. Elektronische Vorrichtung (200) nach einem der Ansprüche 1 bis 13, wobei die Batterieabdeckung (25) eine Metallbatterieabdeckung, eine Glasbatterieabdeckung, eine Kunststoffbatterieabdeckung oder eine Keramikbatterieabdeckung ist.

15. Elektronische Vorrichtung (200) nach einem der Ansprüche 1 bis 13, wobei jede der mindestens zwei Metallrahmenantennen (30) eine Nutantenne ist, die durch Bereitstellen eines Schlitzes auf dem Metallrahmen gebildet wird, wobei die Nutantenne einen ersten Teil, einen zweiten Teil und einen dritten Teil beinhaltet, die durch einen Schlitz getrennt sind, wobei ein nicht leitendes Material zwischen dem ersten Teil und dem zweiten Teil, zwischen dem zweiten Teil und dem dritten Teil und zwischen dem dritten Teil und dem ersten Teil eingefüllt ist.

## Revendications

1. Dispositif électronique (200) comprenant un appareil d'antenne (100), un cadre central (22), un couvercle de batterie (25), et une batterie (24) située entre le cadre central (22) et le couvercle de batterie (25), dans lequel l'appareil d'antenne (100) comprend :
un groupe d'éléments d'alimentation de couplage (10) et un groupe d'éléments de rayonnement (20), dans lequel
le groupe d'éléments de rayonnement (20) comprend : un premier radiateur (201) et un second radiateur (202), dans lequel le premier radiateur (201) et le second radiateur (202) sont disposés sur une surface intérieure du couvercle de batterie (25) ; et
le premier radiateur (201) et le second radiateur (202) sont respectivement situés de deux côtés du groupe d'éléments d'alimentation de couplage (10), et le groupe d'éléments d'alimentation de couplage (10) est couplé séparément et configuré pour alimenter le premier radiateur (201) et le second radiateur (202),
dans lequel le cadre central (22) est un cadre central métallique, le cadre central métallique comprend un cadre métallique, et le cadre métallique est configuré pour former au moins deux antennes à cadre métallique (30) dans l'appareil d'antenne (100).

2. Dispositif électronique (200) selon la revendication 1, dans lequel
au moins l'un du premier radiateur (201) ou du second radiateur (202) est situé entre une projection orthographique d'un cadre latéral (2223, 2224) du cadre central (22) et la batterie (24) vers le couvercle de batterie (25).

3. Dispositif électronique (200) selon la revendication 2, dans lequel
le premier radiateur (201) est situé entre la projection orthographique de l'un cadre latéral (2223) du cadre central (22) et la batterie (24) vers le couvercle de batterie (25), et le second radiateur (202) est situé entre la projection orthographique d'un autre cadre latéral opposé (2224) du cadre central (22) et la batterie (24) vers le couvercle de batterie (25).

4. Dispositif électronique (200) selon l'une quelconque des revendications 1 à 3, dans lequel deux des au moins deux antennes à cadre métallique (30) sont des antennes basse fréquence.

5. Dispositif électronique (200) selon la revendication 4, dans lequel une extrémité du premier radiateur (201) se prolonge vers un cadre supérieur (2221) du cadre central (22), et une extrémité du second radiateur (202) se prolonge vers un cadre inférieur (2222) du cadre central (22) ;
une projection orthographique de l'une des au moins deux antennes basse fréquence vers le couvercle de batterie (25) est opposée au premier radiateur (201), et la projection orthographique de l'une des au moins antennes basse fréquence vers le couvercle de batterie (25) et du premier radiateur (201) sont respectivement situées de deux côtés de la projection orthographique de la batterie (24) vers le couvercle de batterie (25) ; et
une projection orthographique d'un autre des au moins deux antennes basse fréquence vers le couvercle de batterie (25) est opposée au second radiateur (202), et la projection orthographique de l'autre des au moins antennes basse fréquence vers le couvercle de batterie (25) et du second radiateur (202) sont respectivement situées sur les deux côtés de la projection orthographique de la batterie (24) vers le couvercle de batterie (25).

6. Dispositif électronique (200) selon la revendication 1, dans lequel une extrémité du premier radiateur (201) se prolonge vers un cadre inférieur (2222) du cadre central (22), et une extrémité du second radiateur (202) se prolonge vers le cadre inférieur (2222) du cadre central (22) ; ou
une extrémité du premier radiateur (201) se prolonge vers un cadre supérieur (2221) du cadre central (22), et une extrémité du second radiateur (202) se prolonge vers le cadre supérieur (2221) du cadre central (22) ; ou
une extrémité du premier radiateur (201) se prolonge vers un cadre inférieur (2222) du cadre central (22), et une extrémité du second radiateur (202) se prolonge vers un cadre latéral (2223, 2224) du cadre central (22).

7. Dispositif électronique (200) selon l'une quelconque des revendications 1 à 6, dans lequel une longueur électrique du premier radiateur (201) et une longueur électrique du second radiateur (202) varient de 1/4 λ à 1/2 λ, dans lequel λ est une longueur d'onde correspondant à une fréquence de résonance de chacun du premier radiateur (201) et du second radiateur (202).

8. Dispositif électronique (200) selon la revendication 6, dans lequel le groupe d'éléments d'alimentation de couplage (10) comprend : un premier élément d'alimentation de couplage (101) et un second élément d'alimentation de couplage (102), dans lequel le premier élément d'alimentation de couplage (101) est connecté électriquement à une alimentation (60), et le premier élément d'alimentation de couplage (101) est couplé séparément et configuré pour alimenter une autre extrémité du premier radiateur (201) et une extrémité du second élément d'alimentation de couplage (102) ; et
une autre extrémité du second élément d'alimentation de couplage (102) est couplée et est configurée pour alimenter une autre extrémité du second radiateur (202).

9. Dispositif électronique (200) selon la revendication 8, dans lequel le premier élément d'alimentation de couplage (101) comprend : un support et une branche d'alimentation agencée sur le support, dans lequel la branche d'alimentation est électriquement connectée à l'alimentation (60) ; et le support est fixé sur la surface intérieure du couvercle de batterie (25).

10. Dispositif électronique (200) selon la revendication 8, dans lequel le second élément d'alimentation de couplage (102), le premier radiateur (201), et le second radiateur (202) sont des métaux flottants, des couches de graphène, ou des couches conductrices transparentes.

11. Dispositif électronique (200) selon l'une quelconque des revendications 1 à 10, dans lequel une bande de fréquence de fonctionnement du premier radiateur (201) et une bande de fréquence de fonctionnement du second radiateur (202) est de 700 MHz, 800 MHz ou 900 MHz.

12. Dispositif électronique (200) selon l'une quelconque des revendications 1 à 4, comprenant également un groupe d'éléments de mise à la masse de couplage (50), dans lequel le groupe d'éléments de mise à la masse de couplage (50) comprend au moins deux couches de masse de couplage (401), dans lequel l'une des au moins deux couches de masse de couplage (401) est agencée près d'une extrémité du premier radiateur (201) et est couplée et configurée pour être mise à la masse avec le premier radiateur (201) ; et
une autre des au moins deux couches de masse de couplage (401) est agencée près d'une extrémité du second radiateur (202) et est couplée et configurée pour être mise à la masse avec le second radiateur (202).

13. Dispositif électronique (200) selon l'une quelconque des revendications 1 à 12, dans lequel le dispositif électronique (200) est un téléphone mobile, et le couvercle de batterie (25) est une surface de mise à la masse de boîtier arrière du téléphone mobile.

14. Dispositif électronique (200) selon l'une quelconque des revendications 1 à 13, dans lequel le couvercle de batterie (25) est un couvercle de batterie métallique, un couvercle de batterie en verre, un couvercle de batterie en plastique, ou un couvercle de batterie en céramique.

15. Dispositif électronique (200) selon l'une quelconque des revendications 1 à 13, dans lequel chacune des au moins deux antennes à cadre métallique (30) est une antenne à rainure formée en prévoyant une fente sur le cadre métallique, l'antenne à rainure comporte une première partie, une deuxième partie, et une troisième partie qui sont séparées par une fente, un matériau non conducteur est rempli entre la première partie et la deuxième partie, entre la deuxième partie et la troisième partie, et entre la troisième partie et la première partie.
